(19)

Europäisches
Patentamt
European
Patent Office
Office européen
des brevets

(11)  **EP 4 510 233 A1**

(12)  **EUROPEAN PATENT APPLICATION**

(43) Date of publication:
**19.02.2025  Bulletin 2025/08**

(21) Application number: **24156308.9**

(22) Date of filing: **07.02.2024**

(51) International Patent Classification (IPC):
**H01M 4/58** (2010.01)  **H01M 4/62** (2006.01)
**H01M 10/0562** (2010.01)  **H01M 4/02** (2006.01)

(52) Cooperative Patent Classification (CPC):
**H01M 10/0562; H01M 4/5815; H01M 4/625;**
**H01M 2004/028; H01M 2220/20; H01M 2300/0068**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.08.2023  KR 20230107864**

(71) Applicant: **Samsung SDI Co., Ltd.**
**Yongin-si, Gyeonggi-do 17084 (KR)**

(72) Inventors:
• **Lim, Hyungsub**
  **17084 Gyeonggi-do (KR)**

• **Jo, Sungnim**
  **17084 Gyeonggi-do (KR)**
• **Son, Inhyuk**
  **17084 Gyeonggi-do (KR)**
• **Shim, Kyueun**
  **17084 Gyeonggi-do (KR)**
• **Park, Taehyun**
  **17084 Gyeonggi-do (KR)**
• **Lee, Jieun**
  **17084 Gyeonggi-do (KR)**

(74) Representative: **Michalski Hüttermann & Partner**
**Patentanwälte mbB**
**Kaistraße 16A**
**40221 Düsseldorf (DE)**

(54)  **SOLID SECONDARY BATTERY, AND MANUFACTURING METHOD THEREOF**

(57)    A solid secondary battery including a positive electrode, a negative electrode, and an electrolyte layer provided between the positive electrode and the negative electrode is provided. The positive electrode includes a positive current collector, and a positive active material layer provided on at least one side of the positive current collector, the positive active material layer includes a composite positive active material that includes $M_2S$, an alkali metal salt, a two-dimensional carbonaceous nanostructure, and a fibrous carbonaceous material with an aspect ratio of 2 or more, where M is Li or Na. The two-dimensional carbonaceous nanostructure includes graphene, a graphene oxide, a reduced graphene oxide, or a combination thereof, and the composite positive active material includes a solid solution of $M_2S$ and the alkali metal salt.

EP 4 510 233 A1

## Description

## CROSS-REFERENCE TO RELATED APPLICATION

The present application claims priority to and the benefit of Korean Patent Application No. 10-2023-0107864, filed on August 17, 2023, in the Korean Intellectual Property Office, the entire content of which is incorporated herein by reference.

## BACKGROUND

### 1. Field

According to one or more embodiments, the present disclosure relates to a solid secondary battery and a method of preparing the same.

### 2. Description of the Related Art

To satisfy recent industrial demands, extensive development has been conducted on batteries providing high energy density and an improved safety profile. For example, lithium batteries are utilized for one or more suitable purposes in information devices, communication devices, vehicles, and/or the like. Because vehicles are an integral part of, and intimately related to, people's activities, e.g., on an everyday basis, safety is important.

A lithium battery that includes a liquid electrolyte may be more susceptible to the risks of overheating or flammability during an adverse event, e.g., due to a short circuit. An all-solid secondary battery employing a solid electrolyte, instead of a liquid electrolyte, has been suggested. Solid electrolytes are less susceptible to overheating and have lower risks of ignition and/or flammability than that of liquid electrolytes.

Therefore, by employing a solid electrolyte in an all-solid secondary battery, instead of a liquid electrolyte in a compareable secondary battery, the safety profile of the all-solid secondary battery may be improved as compared to the comparable secondary battery.

## SUMMARY

One or more aspects are directed toward a solid secondary battery having improved initial efficiency, specific capacity, energy density, and/or lifespan by utilizing a positive electrode including a composite positive active material with an enhanced electronic conduction network.

One or more aspects are directed toward a method of manufacturing the described solid secondary battery.

Additional aspects will be set forth in part in the description which follows and, in part, will be apparent from the description, or may be learned by practice of the presented embodiments of the present disclosure.

According to one or more embodiments, a solid secondary battery includes a positive electrode, a negative electrode, and an electrolyte layer provided between the positive electrode and the negative electrode, wherein the positive electrode includes a positive current collector, and a positive active material layer provided on at least one side (e.g., on both (e.g., opposite) sides) of the positive current collector,

the positive active material layer includes a composite positive active material, the composite positive active material includes a composite that includes an $M_2S$, an alkali metal salt, a two-dimensional carbonaceous nanostructure, and a fibrous carbonaceous material with an aspect ratio of 2 or more, wherein M is an alkali metal that is Li or Na, the two-dimensional carbonaceous nanostructure includes graphene, a graphene oxide, a reduced graphene oxide, or a composition thereof, and

the composite includes a solid solution of the $M_2S$ and the alkali metal salt.

The positive active material layer may further include a solid electrolyte.

According to one or more embodiments, a method of manufacturing a solid (e.g., all-solid) secondary battery includes milling a composition including an $M_2S$ and an alkali metal salt to produce a milled product,

preparing the composite by adding a two-dimensional carbonaceous nanostructure and a fibrous carbonaceous material with an aspect ratio of 2 or more to the milled product and milling a mixture thereof,
preparing a positive electrode by utilizing a composition prepared by adding a binder to the composite and mixing a mixture thereof,
preparing a negative electrode, and
applying a solid electrolyte between the positive electrode and the negative electrode, wherein M is an alkali metal that is Li or Na.

In the obtaining of a composite, a carbonaceous material may be further added to the composition.

## BRIEF DESCRIPTION OF THE DRAWINGS

The previously described and other aspects, features, and advantages of certain embodiments of the present disclosure will be more apparent from the following description taken in conjunction with the accompanying drawings, in which:

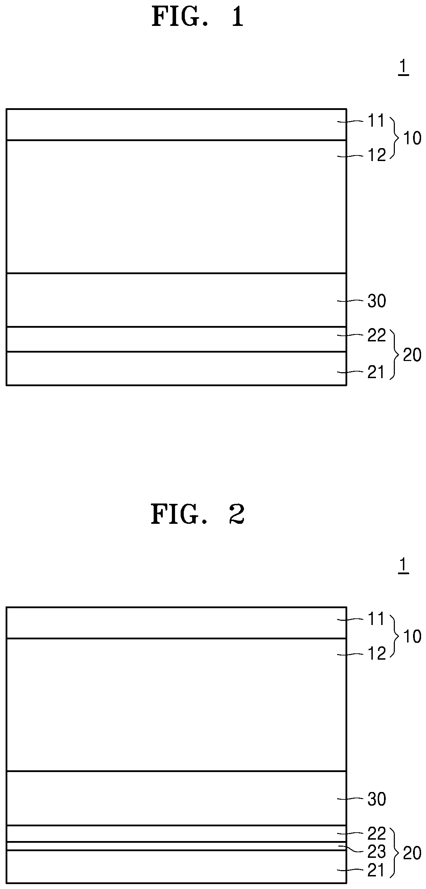

FIGS. 1-6 are each a cross-sectional view of solid (e.g., all-solid) secondary batteries according to one or more embodiments of the present disclosure.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. Expressions such as "at least one of," if (e.g., when) preceding a list of elements, modify the entire list of elements and do not modify the individual elements of the list.

The terminology utilized hereinbelow is utilized for the purpose of describing particular embodiments only and is not intended to limit the present disclosure. As utilized herein, the singular forms are intended to include the plural forms as well, unless the context clearly indicates otherwise. Unless otherwise defined, all terms (including chemical, technical and scientific terms) utilized herein have the same meaning as commonly understood by one or ordinary skill in the art to which this application belongs. Also, it will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments are described herein with reference to schematic cross-sectional view of ideal embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the actual shape of a region of a device and are not intended to limit the scope of claims.

Throughout the specification, if (e.g., when) a component, such as a layer, a film, a region, or a plate, is described as being "above" or "on" another component, the component may be directly above another component, or there may be yet another component(s) therebetween. It will be understood that although the terms "first," "second," and/or the like may be utilized herein to describe one or more suitable elements, these elements should not be limited by these terms. These terms are only utilized to distinguish one element from another element. The described terms are utilized only to distinguish one component from another. Components having substantially the same functional configuration in the present specification and drawings are denoted by the same reference numerals, and redundant descriptions thereof will not be provided.

The present may, however, be embodied in many different forms and should not be construed as limited to the embodiments set forth herein. The embodiments are provided so that this disclosure will be thorough and complete, and will fully convey the scope of the present disclosure to those skilled in the art. Like reference numerals in the drawings denote like elements, and duplicative descriptions thereof may not be provided.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

It will be understood that if (e.g., when) one element is referred to as being "on" another element, it may be directly on the other element, or intervening elements may also be present therebetween. In contrast, if (e.g., when) one element is referred to as being "directly on" another element, there is no intervening element therebetween.

Although the terms "first", "second", "third", and/or the like may be utilized herein to describe one or more suitable elements, components, regions, layers, and/or sections, these elements, components, regions, layers and/or sections should not be limited by these terms. These terms are only utilized to distinguish one element, component, region, layer or section from another region, layer or section. Thus, a first element, component, region, layer, or section discussed could be termed a second element, component, region, layer or section without departing from the teachings of the present disclosure.

The terms utilized herein is for the purpose of describing particular embodiments only and is not intended to be limiting of the present disclosure. As utilized herein, an expression utilized in the singular forms "a", "an" and "the" are intended to include the plural forms as well as encompass the expression "at least one", unless otherwise indicated. The "at least one" should not be construed as singular. As utilized herein, the term "and/or" includes any and all combinations of one or more of the associated listed items. The terms such as "including," "includes," "include," "comprising," "comprises," "comprise," "has," "have," and/or "having" are intended to indicate the existence of features, regions, integers, processes, components, and/or elements disclosed in the specification, and are not intended to preclude the possibility that one or more other features, regions, integers, processes, components, and/or elements thereof may exist or may be added.

Spatially relative terms, such as "under", "lower", "on", "above", or "upper", may be utilized herein for ease of description of the relationship of one element or feature to another element(s) or feature(s) as illustrated in the drawings. It will be understood that the spatially relative terms are intended to encompass different orientations of a device in utilize or operation, in addition to the orientation depicted in the drawings. For example, if (e.g., when) the device in the drawings is turned over, elements described as "" other elements or features would then be oriented "above" the other elements or features. The device may be otherwise oriented (rotated 90 degrees or at other orientations) and the spatially relative descriptors utilized herein interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

## Definitions

The term "Group" refers to a group of elements in the periodic table numbered from 1 to 18 classified according to a classification system of The International Union of Pure and Applied Chemistry ("IUPAC").

In the present disclosure, a "particle diameter" of particles indicates an average diameter of spherical particles or an average length of major axes of nonspherical particles. Particle diameters may be measured utilizing a particle size analyzer (PSA). The "particle diameter" is, for example, an average particle diameter. The "average particle diameter" is, for example, a median particle diameter (D50).

D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size, as measured by a laser diffraction method.

D90 refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size, as measured by a laser diffraction method.

D10 refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size, as measured by a laser diffraction method.

Also, the term "diameter" in the content of other suitable items, as used herein refers to an average (e.g., fiber or nanofiber) diameter when the item (e.g., fiber) has a circular cross-section, and refers to an average major axis length when the item (e.g., fiber) is non-circular in its cross-section.

Average lengths (e.g. average major axis length, average minor axis length) and average thicknesses may be measured by using the same methods as measuring the "particle diameter".

The "aspect ratio" used herein may refer to the average aspect ratio and may be determined from SEM images.

In the present disclosure, the term "metal" includes metals and metalloids such as silicon and germanium in an elemental or ionic state.

In the present disclosure, the term "alloy" refers to a combination of two or more metals.

In the present disclosure, the term "electrode active material" refers to a material for electrodes allowing lithiation and delithiation.

In the present disclosure, the term "positive active material" refers to a material for positive electrodes allowing lithiation and delithiation.

In the present disclosure, the term "negative active material" refers to a material for negative electrodes allowing lithiation and delithiation.

In the present disclosure, the terms "lithiation" and "lithiating" refer to a process of introducing lithium into an electrode active material.

In the present disclosure, the terms "delithiation" and "delithiating" refer to a process of removing lithium from an electrode active material.

In the present disclosure, the terms "charging" and "charge" refer to a process of supplying electrochemical energy to a battery.

In the present disclosure, the terms "discharging" and "discharge" refer to a process of removing electrochemical energy from a battery.

In the present disclosure, the terms "positive electrode" and "cathode" refer to an electrode in which electrochemical reduction and lithiation occur during discharging.

In the present disclosure, the terms "negative electrode" and "anode" refer to an electrode in which electrochemical oxidation and delithiation occur during discharging.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modification, variations, improvements, and substantial equivalents.

Hereinafter, a composite positive active material, a positive electrode and a solid (e.g., all-solid) secondary battery each including the same, and a method of manufacturing the same will be described in more detail.

## Composite Positive Active Material

A composite positive active material according to embodiments includes a composite formed of an $M_2S$, an alkali metal salt, a carbonaceous nanostructure, and a fibrous carbonaceous material with an aspect ratio of 2 or more, wherein the M is an alkali metal and the alkali metal is Li or Na.

An amount of the fibrous carbonaceous material may be from about 1 part by weight to about 40 parts by weight, from about 1 part by weight to about 30 parts by weight, from about 1 part by weight to about 20 parts by weight, from about 1 part by weight to about 10 parts by weight, or from about 5 part by weight to about 10 parts by weight based in 100 parts by weight of a total weight of the composite.

The fibrous carbonaceous material may be defined by length and diameter and may have an aspect ratio (length to diameter) of 2 or more. The fibrous carbonaceous material may have a length, for example average length, of about 1 micrometer ($\mu$m) to about 50 $\mu$m, about 2 $\mu$m to about 45 $\mu$m, about 3 $\mu$m to about 30 $\mu$m, or about 5 $\mu$m to about 30 $\mu$m and a diameter, for example average diameter, of about 10 nanometer (nm) to about 10 $\mu$m. In this regard, the length and diameter are average values.

The fibrous carbonaceous material may include carbon nanofibers, carbon nanotubes, or any combination thereof, and may include, for example, carbon nanofibers.

The fibrous carbonaceous material may (e.g., easily) form a conductive network in a positive electrode by having the length, for example average length, and diameter, for example average diameter, within the ranges described. Faces of the fibrous carbonaceous material may have a circular shape or a polygonal shape such as a triangular shape and a tetragonal shape.

The fibrous carbonaceous material may have an aspect ratio of, for example, 2 or more, 3 or more, 4 or more, 5 or more, 10 or more, or 20 or more. The fibrous carbonaceous material may have an aspect ratio of, for example, about 2 to about 30, about 3 to about 30, about 4 to about 30, about 5 to about 30, about 10 to about 30, or about 20 to about 30. The fibrous carbonaceous material may have an aspect ratio of, for example, about 2 to about 30, about 2 to about 20, about 2 to about 10, about 2 to about 8, about 2 to about 5, or about 2 to about 4. Due to the aspect ratio of the fibrous carbonaceous material within the ranges described, overall electronic conductivity of the composite may be improved and local non-uniformity of electronic conductivity in the composite may be reduced.

In some embodiments, by utilizing the described composite, an extended ion conduction path may be obtained in the positive active material layer. Therefore, during charging and discharging of the solid secondary battery, discontinuity of the ion conduction path caused by a volume change of the positive active material may be effectively prevented or reduced in the positive active material layer. As a result, initial efficiency, discharge capacity, high-rate characteristics, and/or lifespan characteristics of the solid secondary battery may be improved.

In some embodiments, by utilizing the described composite, uniformity of the ion conduction path may be improved in the positive active material layer. Therefore, a pressure required for manufacturing the solid secondary battery may be reduced. In some embodiments, a solid secondary battery having an excellent or suitable ion conduction path even under a reduced pressure may be realized. In some embodiments, during a charging and discharging process of the solid secondary battery, local formation of an overvoltage may be effectively prevented or reduced in the positive active material layer.

The described carbon nanofibers may be controlled or selected to have improved conductivity by doping with nitrogen and fluorine and to reduce side reactions between a positive active material and a sulfide-based solid electrolyte.

By utilizing the composite including the described fibrous carbonaceous material, brittleness of the positive electrode may be compensated for enabling formation of a positive electrode as a thick film, and thus a solid secondary battery with an increased energy density may be manufactured. In some embodiments, because a volume change of the positive active material occurring during charging and discharging may be accommodated dispersedly throughout the entire length by including the fibrous carbonaceous material, the volume change may be more effectively accommodated therein compared to a carbonaceous material having a spherical particulate shape. As a result, discontinuity between the positive active material and the solid electrolyte caused by a volume change of the positive active material may be inhibited in the positive active material layer and uniformity of components may be improved in the positive active material layer. As a result, cycle characteristics of the solid secondary battery may be improved.

As utilized herein, the 'thick film' refers to a film having a positive electrode loading level exceeding 8 milligram per square centimeter (mg/cm$^2$), for example, 9 mg/cm$^2$ or more, 10 mg/cm$^2$ or more, about 10 mg/cm$^2$ to about 60 mg/cm$^2$, about 10 mg/cm$^2$ to about 45 mg/cm$^2$, or about 10 mg/cm$^2$ to about 30 mg/cm$^2$.

The composite may exclude (e.g., not be in) a cluster form, but a form in which components of the composite are uniformly dispersed as fine particles.

The fibrous carbonaceous material may have an aspect ratio of, for example, 2 or more, 3 or more, 4 or more, 5 or more, 10 or more, or 20 or more. The fibrous carbonaceous material may have an aspect ratio of, for example, 2 to 30, 3 to 30, 4 to 30, 5 to 30, 10 to 30, or 20 to 30. The fibrous carbonaceous material may have an aspect ratio of, for example, 2 to 30, 2 to 20, 2 to 10, 2 to 8, 2 to 5, or 2 to 4. Due to the aspect ratio of the fibrous carbonaceous material within the ranges described, overall electronic conductivity of the composite may be improved and local non-uniformity of electronic conductivity in the composite may be reduced.

The fibrous carbonaceous material may have, for example, a rod shape, a tubular shape, a needle shape, a wire structure, or any combination thereof, but is not limited thereto, and any carbonaceous material having a fibrous structure commonly available in the art may also be utilized. Due to the rod shape, the tubular shape, the needle shape, the wire structure, and/or the like of the fibrous carbonaceous material, the ion conduction path may be extended in the solid secondary battery including the fibrous carbonaceous material, a volume change of the positive active material may be more effectively accommodated during charging and discharging of the solid secondary battery, and the ion conduction path in the solid secondary battery may be maintained although the volume of the positive active material changes. As a result, deterioration of the solid secondary battery may be inhibited and cycle characteristics of the solid secondary battery may be improved.

The fibrous carbonaceous material may have a length, for example average length, L of, for example, about 0.1 $\mu$m to about 100 $\mu$m, about 0.5 $\mu$m to about 100 $\mu$m, about 1 $\mu$m to about 100 $\mu$m, about 1 $\mu$m to about 50 $\mu$m, about 1 $\mu$m to about 30 $\mu$m, about 1 $\mu$m to about 20 $\mu$m, or about 1 $\mu$m to about 10 $\mu$m. The fibrous carbonaceous material may have a diameter, for example average diameter, D of, for example, about 10 nm to about 10 $\mu$m, about 10 nm to about 5 $\mu$m, about 50 nm to about 5 $\mu$m, about 100 nm to about 5 $\mu$m, about 100 nm to about 3 $\mu$m, about 100 nm to about 2 $\mu$m, about 200 nm to about 2 $\mu$m, about 200 nm to about 1.5 $\mu$m, or about 200 nm to about 1 $\mu$m. The fibrous carbonaceous material may have a diameter, for example average diameter, D of, for example, about 10 nm to about 10 $\mu$m, about 10 nm to about 5 $\mu$m, about 10 nm to about 1 $\mu$m, about 10 nm to about 800 nm, about 10 nm to about 500 nm, about 10 nm to about 300 nm, about 10 nm to about 200 nm, or about 10 nm to about 100 nm. Due to the length, for example average length, and/or diameter, for example average diameter, of the fibrous carbonaceous material within the ranges described, the ion conduction path may be extended in a lithium battery including the fibrous carbonaceous material, a volume change of the positive active material may be more effectively accommodated during charging and discharging of the solid secondary battery, and the ion conduction path in the solid secondary battery may be maintained although the volume of the positive active material changes. As a result, deterioration of the solid secondary battery may be inhibited and cycle characteristics of the solid secondary battery may be improved.

A cross-section perpendicular to the lengthwise direction of the fibrous carbonaceous material, i.e., a side surface of the fibrous carbonaceous material, may have, for example, an irregular, circular, or polygonal shape. The shape of the side surface of the fibrous carbonaceous material may be, for example, a shape determined by a plan view viewed from the lengthwise direction (z direction) of the fibrous carbonaceous material. The polygonal shape may include, for example, a triangular, tetragonal, pentagonal, hexagonal, heptagonal, octagonal, nonagonal, and decagonal shape, but is not limited thereto, and any polygonal shapes commonly available in the art may also be utilized. The circular shape may be, for example, a perfectly round shape or an oval shape, but is not limited thereto, and any overall round shapes may be utilized therefor. A circularity of the cross-section perpendicular to the lengthwise direction of the fibrous carbonaceous material, i.e., circularity of a side surface of the fibrous carbonaceous material, may be for example, 0.6 or more, 0.7 or more, 0.8 or more, or 0.9 or more. The circularity may be calculated, for example, by $4\pi A/P^2$, wherein A may be an area of a side surface or cross-section of the fibrous carbonaceous material, and P may be a perimeter of the side surface or cross-section.

An amount of the two-dimensional carbonaceous nanostructure may be from about 0.1 part by weight to about 20 parts by weight, from about 1 part by weight to about 15 parts by weight, from about 5 parts by weight to about 15 parts by weight, or from about 5 parts by weight to about 10 parts by weight based on 100 parts by weight of the composite, and the two-dimensional carbonaceous nanostructure has a specific surface area of about 1 $m^2/g$ to about 50 $m^2/g$, an average diameter of about 1 $\mu m$ to about 50 $\mu m$, about 2 $\mu m$ to about 40 $\mu m$, or about 3 $\mu m$ to about 30 $\mu m$, and a thickness, for example average thickness, of about 5 $\mu m$ to about 50 nm, about 10 $\mu m$ to about 40 nm, or about 15 $\mu m$ to about 30 nm. In the present disclosure, when the structures are circular, "diameter" indicates a circular diameter or an average circular diameter, and when the structures are non-circular, the "diameter" indicates a major axis length or an average major axis length.

The term "two-dimensional carbonaceous nanostructure" used herein refers to a carbon nanostructure with two dimensions significantly larger than the other one dimension, e.g., a carbon nanostructure in which the combined area defined by two dimensions is significantly larger than a thickness. The two-dimensional carbonaceous nanostructure may be or include graphene, a graphene oxide, or any combination thereof. Because the two-dimensional carbonaceous nanostructure has a larger specific surface area and a softer structure than carbon nanotube that is a onedimensional carbonaceous material, a network may be improved, an increase in resistance caused by a volume change may be inhibited by around (e.g., surrounding) the composite as a material forming a house-of-cards aggregation structure, and an anchoring effect of nano-scale lithium sulfide may be obtained, by utilizing the two-dimensional carbonaceous nanostructure.

The two-dimensional carbonaceous nanostructure may include graphene doped with a dopant, wherein the dopant is an n-type or kind dopant or a p-type or kind dopant and may include nitrogen (N), phosphorus (P), boron (B), sulfur (S), fluorine (F), chlorine (Cl), bromine (Br), germanium (Ge), gallium (Ga), or any combination thereof.

Graphene may be a polycyclic aromatic molecule formed of a plurality of carbon atoms covalently bonded to one another, and the covalently bonded carbon atoms constitute a 6-membered carbon ring as a basic repeating unit, but the graphene may further include 5-membered and/or 7-membered carbon rings. As a result, the graphene appears as a single layer of covalently bonded carbon atoms (in general, $sp^2$ bonds). Although the graphene may be formed as a single layer, a plurality of graphene layers may be stacked to form a multilayer structure. For example, the graphene may have 1 layer to 100 layers, 2 layers to 100 layers, or 3 layers to 50 layers.

As a graphene content (e.g., amount) increases, electronic conductivity may increase but ionic conductivity may decrease. Therefore, graphene domain size may be important. The graphene domain size may be adjusted by utilizing a thickness, for example average thickness, of graphene, and/or the like. According to embodiments, the thickness, for example average thickness, of graphene may be from about 10 nm to about 30 $\mu m$, from about 100 nm to about 30 $\mu m$, or from about 1 $\mu m$ to about 3 $\mu m$.

The two-dimensional carbonaceous nanostructure includes a two-dimensional carbonaceous nanostructure doped with a dopant, and the dopant is an n-type or kind dopant or p-type or kind dopant and includes nitrogen (N), phosphorus (P), boron (B), sulfur (S), fluorine (F), chlorine (Cl), bromine (Br), germanium (Ge), gallium (Ga), or any combination thereof. By utilizing the doped two-dimensional carbonaceous nanostructure, conductivity and side reaction properties may be controlled or selected.

The doped two-dimensional carbonaceous nanostructure may be, for example, a doped two-dimensional carbonaceous nanostructure.

The dopant may include an n-type or kind dopant, a p-type or kind dopant, or any combination thereof. The n-type or kind dopant having more electrons than carbon is a dopant utilized to introduce electrons into a carbonaceous material. The p-type or kind dopant having less electrons than carbon is a dopant utilized to introduce holes into a two-dimensional carbonaceous nanostructure. The carbonaceous nanostructure may include, for example, a dopant-doped graphene. The doped graphene may include, for example, a n-type or kind dopant, a p-type or kind dopant, or any combination thereof. The dopant may include, for example, nitrogen (N), phosphorus (P), boron (B), sulfur (S), fluorine (F), chlorine (Cl), bromine (Br), germanium (Ge), gallium (Ga), or any combination thereof. For example, nitrogen (N) and phosphorus (P) are n-type or kind dopants. For example, gallium (Ga) is a p-type or kind dopant. An amount of the dopant contained in the doped carbonaceous nanostructure may be, for example, 3 at% or less or 1 at% or less. By doping the carbonaceous nanostructure with the dopant, conductivity of the carbonaceous material may further be improved.

M is an alkali metal. The alkali metal is Li or Na. $M_2S$ is, for example $Li_2S$ or $Na_2S$. The composite includes a solid solution of $M_2S$ and an alkali metal salt.

Because $M_2S$ constitutes a composite with an alkali metal salt and a carbonaceous material, both (e.g., simultaneously) ionic conductivity and electronic conductivity of $M_2S$ may be improved. Because the composite includes the alkali metal salt, ionic conductivity of the composite positive active material may be improved and internal resistance of a positive electrode and a solid secondary battery, each including the composite positive active material, may be reduced. Because the composite includes the carbonaceous material, electronic conductivity of the composite positive active material may be improved and internal resistance of a positive electrode and a solid secondary battery, each including the composite positive active material, may be reduced.

Because the composite includes $M_2S$ crystallites and the size of the $M_2S$ crystallites is reduced to be 11 nm or less, a volume change of the $M_2S$ crystallites may be reduced during charging and discharging. As the size of the $M_2S$ crystallites decreases, a volume change of one $M_2S$ crystallite is reduced resulting in a reduction in the overall volume during charging and discharging. For example, because grain boundaries between the plurality of $M_2S$ crystallites easily accommodate the volume change of the $M_2S$ crystallites during charging and discharging due to the decreased size of the $M_2S$ crystallite, a volume change of the composite may be reduced during charging and discharging. The possibility of occurrence of defects such as cracks caused by a volume change of the composite during charging and discharging may be reduced. Due to the composite included in the composite positive active material, cycle characteristics of a solid secondary battery including the composite positive active material may be improved. For example, lifespan characteristics of a solid secondary battery including the composite positive active material may be improved.

Because the composite includes $M_2S$ crystallites and the size of the $M_2S$ crystallites is reduced to 11 nm or less, a contact area of the $M_2S$ crystallites with the alkali metal salt and/or the carbonaceous material may further be increased. Because the contact area of the $M_2S$ crystallites with the alkali metal salt and/or the carbonaceous material is increased, ionic conductivity and/or electronic conductivity of the composite may further be improved. Due to the composite included in the composite positive active material, reversibility of an electrode reaction may be improved in a solid secondary battery including the composite positive active material. As a result, a specific capacity of the composite positive active material may be increased.

By including the solid solution of $M_2S$ and the alkali metal salt, the composite may have improved ionic conductivity. For example, because the solid solution of $M_2S$ and the alkali metal salt includes alkali metal ions located in the $M_2S$ crystallites, ionic conductivity of the solid solution of $M_2S$ and the alkali metal salt may be increased compared to ionic conductivity of $M_2S$. As a result, ionic conductivity of the composite may be increased and internal resistance of the composite may be reduced. Due to the composite of the composite positive active material, cycle characteristics of a secondary battery including the composite positive active material may be improved. For example, high-rate characteristics of a secondary battery including the composite positive active material may be improved.

A $Li_2S$-alkali metal salt-carbonaceous nanostructure composite is distinguished from a simple mixture of $Li_2S$, the alkali metal salt, and the carbonaceous nanostructure. Because the simple mixture of $Li_2S$, the alkali metal salt, and the carbonaceous nanostructure cannot maintain dense interfaces among the $Li_2S$, the alkali metal salt, and the carbonaceous nanostructure, lifespan characteristics of the solid secondary battery may deteriorate.

The composite includes $M_2S$. Due to a high theoretical capacity of $M_2S$, a secondary battery having high energy density may be provided. However, due to low ionic conductivity and/or electronic conductivity of $M_2S$, a composite with the alkali metal salt and the carbonaceous material is formed to overcome these disadvantages. An amount of $M_2S$ contained in the composite may be, for example, from 10 to 80 wt%, 20 to 70 wt%, 30 to 60 wt%, or 40 to 60 wt% based on a total weight of the composite. With a too large amount of $M_2S$, it is difficult to increase ionic conductivity and/or electronic conductivity of $M_2S$. With a too small amount of $M_2S$, energy density of a secondary battery may decrease.

The composite includes an alkali metal salt. The alkali metal salt is, for example, a compound that excludes (e.g., not including) sulfur (S). The alkali metal salt may be, for example, a binary compound or a ternary compound. The alkali metal salt may be, for example, a binary compound consisting of an alkali metal and one element selected from Groups 13 to 17 of the periodic table. The alkali metal salt may be, for example, a ternary compound consisting of an alkali metal and two elements selected from Groups 13 to 17 of the periodic table. In present disclosure, "not including a or any 'component'" "excluding a or any 'component'", "'component'-free", and/or the like refers to that the "component" not being added, selected or utilized as a component in the composition, but the "component" of less than a suitable amount may still be included due to other impurities and/or external factors.

The alkali metal salt may be, for example, a lithium salt. The lithium salt, as a binary compound, may include, for example, $LiI$, $LiBr$, $LiCl$, $LiF$, $LiH$, $Li_2O$, $Li_2Se$, $Li_2Te$, $Li_3N$, $Li_3P$, $Li_3As$, $Li_3Sb$, $Li_3Al_2$, $LiB_3$, or any combination thereof. The lithium salt, as a ternary compound, may include, for example, $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or any combination thereof. By including such a lithium salt, the composite may have improved ionic conductivity. The lithium salt may more easily form a solid solution with $Li_2S$ in the composite.

The alkali metal salt may be, for example, a sodium salt. The sodium salt, as a binary compound, may include, for example, $NaI$, $NaBr$, $NaCl$, $NaF$, $Na_2O$, $Na_2Se$, $Na_3N$, $Na_3P$, $Na_3As$, $Na_3Sb$, $Na_3Al_2$, $NaBs$, or any combination thereof. The sodium salt, as a ternary compound, may include, for example, $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, or any combination thereof. As the composite includes such a sodium salt, ionic conductivity of the composite may further be improved. The sodium salt may more easily form a solid solution with $Na_2S$ in the composite.

In the composite, an amount of the alkali metal salt may be from 1 to 40 wt%, from 5 to 35 wt%, from 10 to 35 wt%, from 15 to 35 wt%, from 20 to 35 wt%, or from 25 to 35 wt% based on a total weight of the composite. With a too large amount of the alkali metal salt, energy density of a secondary battery may decrease. With a too small amount of the alkali metal salt, ionic conductivity decreases resulting in an increase in internal resistance of the composite positive active material. As a result, cycle characteristics of a solid secondary battery may deteriorate.

In the composite, a molar ratio of $M_2S$ to the alkali metal salt may be, for example, from 50:50 to 95:5, from 60:40 to 95:5, from 60:40 to 90:10, from 65:35 to 90:10, from 65:35 to 85:15, or from 70:30 to 85:15. In the composite, a molar ratio of $M_2S$ to the alkali metal salt may be, for example, from 50:50 to 95:5, from 50:50 to 90:10, from 50:50 to 85:15, from 50:50 to 80:20, from 50:50 to 75:25, or from 50:50 to 70:30. If (e.g., when) the molar ratio of $M_2S$ to the alkali metal salt is within the ranges described, cycle characteristics of a secondary battery including the composite positive active material may further be improved. With a too high molar ratio of $M_2S$ to the alkali metal salt, effects of the alkali metal salt on increasing ionic conductivity may be negligible. With a too low molar ratio of $M_2S$ to the alkali metal salt, energy density of a secondary battery including the composite positive active material may decrease.

In the composite, a molar ratio of $Li_2S$ to the lithium salt may be, for example, from 50:50 to 95:5, from 60:40 to 95:5, from 60:40 to 90:10, from 65:35 to 90:10, from 65:35 to 85:15, or from 70:30 to 85:15. In the composite, the molar ratio of $Li_2S$ to the lithium salt may be, for example, from 50:50 to 95:5, from 50:50 to 90:10, from 50:50 to 85:15, from 50:50 to 80:20, from 50:50 to 75:25, or from 50:50 to 70:30. If (e.g., when) the molar ratio of $Li_2S$ to the lithium salt is within the ranges described, cycle characteristics of a solid secondary battery including the composite positive active material may further be improved. With a too high molar ratio of $Li_2S$ to the alkali metal salt, effects of the lithium salt on increasing ionic conductivity may be negligible. With a too low molar ratio of $Li_2S$ to the alkali metal salt, energy density of a solid secondary battery including the composite positive active material may decrease.

An amount of the carbonaceous nanostructure contained in the composite may be, for example, from 1 to 20 wt%, from 5 to 20 wt%, or from 10 to 20 wt% based on a total weight of the composite. With a too large amount of the carbonaceous material, energy density of a solid secondary battery may decrease. With a too small amount of the carbonaceous material, electronic conductivity of the composite may decrease, resulting in an increase in internal resistance of the composite positive active material. As a result, cycle characteristics of the solid secondary battery may deteriorate.

An intensity derived from a first peak observed at a diffraction angle (2θ) of 18° ± 2.0° in a X-Ray diffraction (XRD) spectrum of the composite may be less (e.g., smaller) than an intensity derived from a second peak observed at a diffraction angle (2θ) of 18° ± 2.0° corresponding to crystal plane (002) of graphene in an XRD spectrum of graphene utilized to manufacture the composite. The first peak has a first full width at half maximum (FWHM1), and the second peak has a second full width at half maximum (FWHM2), wherein the first full width at half maximum is greater than the second full width at half maximum, and the first full width at half maximum is 1° or more, 1.05° or more, 1.10° or more, or 1.15° or more. The first peak and the second peak observed at the diffraction angle (2θ) of 18° ± 2.0° are peaks corresponding to crystal plane (002) of carbon graphene or carbon nanotube.

A first lattice constant d1 derived from a third peak observed at a diffraction angle (2θ) of 27° ± 2.0° corresponding to crystal plane (111) of $M_2S$ in an XRD spectrum of the composite may be greater than a second lattice constant d2 derived from a fourth peak observed at a diffraction angle (2θ) of 27° ± 2.0° corresponding to crystal plane (111) of $M_2S$ in an XRD spectrum of $M_2S$ utilized to manufacture the composite. As a $M_2S$-alkali metal salt-carbonaceous nanostructure composite has a greater lattice constant (e.g., d1) than that of $M_2S$ utilized to manufacture the composite, alkali metal ions may more easily migrate in the $M_2S$ crystal structure of the composite. Ionic conductivity of the composite positive active material including the composite may further be increased. A solid secondary battery including the composite positive active material may have decreased internal resistance and improved cycle characteristics. A difference between the first lattice constant d1 and the second lattice constant d2 may be 0.05 angstrom (Å) or more, 0.1 Å or more, 0.15 Å or more, 0.2 Å or more, or 0.25 Å or more. A magnitude of the first lattice constant d1 may be, for example, 5.78 Å or more, 5.80 Å or more, 5.82 Å or more, 5.85 Å or more, 5.90 Å or more, 5.95 Å or more, or 6.0 Å or more. Due to the magnitude of the first lattice constant d1 of the composite within the ranges described, the composite positive active material including the composite may have further improved ionic conductivity. A solid secondary battery including the composite positive active material may have decreased internal resistance and improved cycle characteristics.

The third peak observed at a diffraction angle (2θ) of 27° ± 2.0° corresponding to crystal plane (111) of $M_2S$ in the XRD spectrum of the composite has a third diffraction angle, and the fourth peak observed at a diffraction angle (2θ) of 27° ± 2.0° corresponding to crystal plane (111) of $M_2S$ in an XRD spectrum of $M_2S$ utilized to manufacture the composite may have a fourth diffraction angle. The third diffraction angle may be less (e.g., smaller) than the fourth diffraction angle. For example, a position of the third peak may be shifted to a lower angle than a position of the fourth peak. Therefore, the $M_2S$-alkali metal salt-carbonaceous nanostructure composite has a reduced (e.g., smaller) crystallite size compared to $M_2S$ utilized to manufacture the composite. As the $M_2S$-alkali metal salt-carbonaceous nanostructure composite has a reduced crystallite size, a volume change of crystallites decreases during charging and discharging, and thus a volume change of the composite including the plurality of crystallites may be reduced during charging and discharging. Occurrence of defects such as cracks may be inhibited in the composite positive active material including the composite during charging and discharging. As a result, cycle characteristics of a solid secondary battery including the composite positive active material may be improved.

The third peak observed at a diffraction angle (2θ) of 27°±2.0° corresponding to crystal plane (111) in the XRD spectrum of the composite has a third full width at half maximum (FWHM1), and the fourth peak observed at a diffraction angle (2θ) of 27° ± 2.0° corresponding to crystal plane (111) of $M_2S$ in an XRD spectrum of $M_2S$ utilized to manufacture the composite has a fourth full width at half maximum (FWHM2). The third full width at half maximum may be greater than the fourth full width at half maximum. Therefore, the $M_2S$-alkali metal salt-carbonaceous nanostructure composite may have an increased lattice strain compared to $M_2S$ utilized to manufacture the composite. For example, as $M_2S$ and the alkali metal salt form a solid solution, the $M_2S$-alkali metal salt-two-dimensional carbonaceous nanostructure composite may have an increased lattice strain. As the $M_2S$-alkali metal salt two-dimensional carbonaceous nanostructure composite has an increased full width at half maximum (FWHM) compared to $M_2S$ utilized to manufacture the composite, ionic conductivity of the composite positive active material including the composite may further be improved. A solid secondary battery including the composite positive active material may have decreased internal resistance and improved cycle characteristics.

The first full width at half maximum may be, for example, 1° or more, 1.05° or more, 1.10° or more, or 1.15° or more. As the composite has the first full width at half maximum (FWHM1) within the ranges described, ionic conductivity of the composite positive active material including the composite may further be improved. A solid secondary battery including the composite positive active material may have reduced internal resistance and improved cycle characteristics.

A particle size of the composite positive active material, i.e., a particle diameter or size of the composite, may be, for example, 10 μm or less, 8 μm or less, 5 μm or less, 2 μm or less, 1.5 μm or less, or 1 μm or less. The particle size of the composite may be, for example, in a range of about 1 μm to about 10 μm, in a range of about 2 μm to about 8 μm, or in a range of about 3 μm to about 8 μm. The composite may have a particle size of, for example, about 0.1 μm to about 10 μm, about 0.1 μm to about 8 μm, about 0.1 μm to about 5 μm, 0.1 to 2 μm, 0.1 to 1.5 μm, or 0.1 to 1 μm. With the particle size of the composite within the ranges described, a volume change may be inhibited during charging and discharging and deterioration of the composite positive active material including the composite may be inhibited during charging and discharging. An excessive increase in the particle size of the composite increases a volume change of the composite during charging and discharging, thereby promoting deterioration of the composite positive active material including the composite. As a result, cycle characteristics of a solid secondary battery including the composite positive active material may deteriorate. In this regard, the size of the composite, for example, a particle diameter of the composite, may be measured by utilizing a laser diffraction method or a scanning electron microscope (SEM). The particle diameter of the composite is an arithmetic average of particle diameters of a plurality of particles measured utilizing software from a scanning electron microscope image.

Because the composite includes lithium sulfide and, additionally, includes the alkali metal salt having ionic (ion) conductivity and the carbonaceous nanostructure having electronic (electron) conductivity, electron conduction may occur (e.g., be performed) from the surface to the inside of the composite more easily. Internal resistance of the composite positive active material including the composite may be reduced, and cycle characteristics of a solid secondary battery including the composite positive active material may further be improved.

Throughout the specification, the diameter, for example average diameter, (size) and length, for example average diameter, of the carbonaceous nanostructure may be measured from images obtained by utilizing an SEM or an optical microscope. In some embodiments, the diameter and/or length of the carbonaceous nanostructure may be measured by a laser diffraction method. The carbonaceous nanostructure may be utilized to manufacture the composite after being converted into the carbonaceous nanostructure via dispersion in a solvent.

The composite may include, for example, about 30 parts by weight to about 80 parts by weight of $M_2S$, about 1 part by weight to about 40 parts by weight of the alkali metal salt, about 1 part by weight to about 20 parts by weight of the carbonaceous nanostructure, and about 1 part by weight to about 40 parts by weight of the fibrous carbonaceous material based on 100 parts by weight of the composite. The composite may include $M_2S$, for example, in an amount of about 30 parts by weight to about 80 parts by weight, about 30 parts by weight to about 70 parts by weight, about 30 parts by weight to about 60 parts by weight, or about 40 parts by weight to about 60 parts by weight based on 100 parts by weight of the composite. The composite may include the alkali metal salt, for example, in an amount of about 10 parts by weight to about 40 parts by weight, about 15 parts by weight to about 40 parts by weight, about 20 parts by weight to about 40 parts by weight, or about 25 parts by weight to about 35 parts by weight based on 100 parts by weight of the composite. The composite may include the carbonaceous nanostructure, for example, in an amount of about 1 part by weight to about 20 parts by weight, about 5 parts by weight to about 20 parts by weight, or about 5 parts by weight to about 15 parts by weight based on 100 parts by weight of the composite. The composite may include the fibrous carbonaceous material, for example, in an amount of about 1 part by weight to about 40 parts by weight, about 1 part by weight to about 20 parts by weight, about 5 parts by weight to about 20 parts by weight, or about 5 parts by weight to about 15 parts by weight based on 100 parts by weight of the composite. As the composite has the described composition, the composite positive active material including the composite may provide excellent or suitable ionic conductivity and/or electronic conductivity.

The composite according to embodiments may further include a carbonaceous material.

The composite may have an ionic conductivity of, for example, $1 \times 10^{-5}$ siemens per centimeter (S/cm) or more,

$2\times10^{-5}$ S/cm or more, $4\times10^{-5}$ S/cm or more, $6\times10^{-5}$ S/cm or more, $8\times10^{-5}$ S/cm or more, or $1\times10^{-4}$ S/cm or more at 25 °C. Ionic conductivity may be measured by, for example, electrochemical impedance spectroscopy, DC polarization method, and/or the like. As the composite has an ionic conductivity within the ranges described, internal resistance of the composite positive active material including the composite may decrease. Cycle characteristics of a solid secondary battery including the composite positive active material may be improved. The composite may have an electronic conductivity of, for example, $1\times10^{-5}$ S/cm or more, $2\times10^{-5}$ S/cm or more, $4\times10^{-5}$ S/cm or more, $6\times10^{-5}$ S/cm or more, $8\times10^{-5}$ S/cm or more, or $1\times10^{-4}$ S/cm or more at 25 °C. Electronic conductivity may be measured by, for example, electrochemical impedance spectroscopy, DC polarization method, and/or the like. As the composite has an electronic conductivity within the ranges described, internal resistance of the composite positive active material including the composite may decrease. A solid secondary battery including the composite positive active material may have increased initial efficiency, high electrode energy density, and improved lifespan characteristics.

**Positive Electrode**

**Positive Electrode: Positive Active Material**

A positive electrode according to some embodiments includes a positive current collector; and a positive active material layer provided on at least one side (e.g., on both (e.g., opposite) sides) of the positive current collector. The positive active material layer includes the described composite positive active material and may further include a solid electrolyte. The positive active material layer includes about 40 parts by weight to about 90 parts by weight of the composite positive active material and about 10 parts by weight to about 60 parts by weight of the solid electrolyte based on 100 parts by weight of the positive active material layer. By including the composite positive active material and the solid electrolyte, the positive electrode may have further decreased internal resistance. Therefore, cycle characteristics of a solid secondary battery including the positive electrode may further be improved.

Referring to FIGS. 1 to 6, a positive electrode 10 includes: a positive current collector 11; and a positive active material layer 12 provided on at least one side (e.g., on both (e.g., opposite) sides) of the positive current collector 11. The positive active material layer 12 includes the described composite positive active material and a solid electrolyte.

The positive active material layer 12 may include the composite positive active material in an amount of about 40 parts by weight to about 90 parts by weight, about 40 parts by weight to about 80 parts by weight, about 50 parts by weight to about 80 parts by weight, or about 50 parts by weight to about 70 parts by weight based on 100 parts by weight of the positive active material layer 12. With a too small amount of the composite positive active material, energy density of a solid secondary battery decreases. With a too large amount of the composite positive active material, deterioration of a positive electrode may be promoted by a volume change of the positive electrode during charging and discharging. As a result, cycle characteristics of a solid secondary battery 1 may deteriorate.

The positive active material layer 12 may further include another positive active material different from the described composite positive active material.

The different positive active material may include, for example, a $Li_2S$-containing composite. The $Li_2S$ composite includes, for example, a composite of $Li_2S$ and a carbonaceous material, a composite of $Li_2S$, a carbonaceous material, and a solid electrolyte, a composite of $Li_2S$ and a solid electrolyte, a composite of $Li_2S$ and a lithium salt, a composite of $Li_2S$ and a metal carbide, a composite of $Li_2S$, a carbonaceous material, and a metal carbide, a composite of $Li_2S$ and metal nitride, a composite of $Li_2S$, a carbonaceous material, and a metal nitride, or any combination thereof.

The composite of $Li_2S$ and a carbonaceous material includes a carbonaceous material. The carbonaceous material is as described in the carbonaceous material of the composite positive active material. A method of preparing the composite of $Li_2S$ and a carbonaceous material may be a dry method, a wet method, or any combination thereof, but is not limited thereto, and any method commonly available in the art may also be utilized. The method of preparing the composite of $Li_2S$ and a carbonaceous material may be, for example, milling, heat treatment, and deposition, but is not limited thereto, and any method commonly available in the art may also be utilized.

The composite of $Li_2S$, a carbonaceous material, and a solid electrolyte includes a carbonaceous material and a solid electrolyte. The carbonaceous material is as described in the described composite of $Li_2S$ and a carbonaceous material. The solid electrolyte may be any solid electrolyte commonly available in the art as an ion-conductive material. The solid electrolyte may be, for example, an inorganic solid electrolyte. The solid electrolyte is, for example, a crystalline solid electrolyte, an amorphous solid electrolyte, or any combination thereof. The solid electrolyte may be, for example, a sulfide-based solid electrolyte, an oxide-based solid electrolyte, or any combination thereof. The sulfide-based solid electrolyte may include, for example, Li, S and/or P, and may further include a halogen element. The sulfide-based solid electrolyte may be selected from sulfide-based solid electrolytes utilized in the electrolyte layer. The sulfide-based solid electrolyte may have an ionic conductivity of, for example, $1\times10^{-5}$ S/cm or more at room temperature. The oxide-based solid electrolyte includes, for example, Li, O, and a transition metal element, and may optionally further include another element. The oxide-based solid electrolyte may be, for example, a solid electrolyte having an ionic conductivity of $1\times10^{-5}$

S/cm or more at room temperature. The oxide-based solid electrolyte may be selected from oxide-based solid electrolytes utilized in the electrolyte layer.

The composite of $Li_2S$ and a solid electrolyte includes a solid electrolyte. For descriptions of the solid electrolyte, refer to the described composite of $Li_2S$, the carbonaceous material, and the solid electrolyte.

The composite of $Li_2S$ and a lithium salt includes $Li_2S$ and a lithium salt. The lithium salt is as described in the lithium salt of the composite positive active material. The lithium salt is, for example, at least one lithium halide compound selected from among LiF, LiCl, LiBr, and LiI. The composite of $Li_2S$ and a lithium salt may be, for example, a composite of $Li_2S$ and a lithium halide. As the composite of $Li_2S$ and a lithium salt includes a lithium halide compound, ionic conductivity may further be improved. The composite of $Li_2S$ and a lithium salt is distinguished from a simple mixture of $Li_2S$, a carbonaceous material, and a lithium salt. The simple mixture of $Li_2S$ and a lithium salt cannot maintain a dense interface between $Li_2S$ and the lithium salt to provide high interfacial resistance, thereby deteriorating lifespan characteristics of a solid (e.g., all-solid) secondary battery.

The composite of $Li_2S$ and a metal carbide includes a metal carbide. The metal carbide is, for example, a two-dimensional metal carbide. The two-dimensional metal carbide is represented by, for example, $M_{n+1}C_nT_x$ (where M is a transition metal, T is a terminal group, T is O, OH, and/or F, n=1, 2, or 3, and x is a number of terminal groups). The two-dimensional metal carbide may be, for example, $Ti_2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or any combination thereof. The surface of the two-dimensional metal carbide is terminated with O, OH, and/or F.

The composite of $Li_2S$, a carbonaceous material, and a metal carbide includes a carbonaceous material and a metal carbide. The carbonaceous material is as described in the composite of $Li_2S$ and a carbonaceous material. The metal carbide is as described in the composite of $Li_2S$ and a metal carbide.

The composite of $Li_2S$ and a metal nitride includes a metal nitride. The metal nitride is, for example, a two-dimensional metal nitride. The two-dimensional metal nitride may be represented by, for example, $M_{n+1}N_nT_x$ (where M is a transition metal, T is a terminal group, T is O, OH, and/or F, n=1, 2, or 3, and x is a number of terminal groups). The surface of the two-dimensional metal nitride is terminated with O, OH, and/or F.

The composite of $Li_2S$, a carbonaceous material, and a metal nitride includes a carbonaceous material and a metal nitride. The carbonaceous material is as described in the composite of $Li_2S$ and a carbonaceous material. The metal nitride is as described in the composite of $Li_2S$ and a metal nitride.

The positive active material layer 12 may further include, for example, a sulfide-based compound different from the described positive active material. The sulfide-based compound may be, for example, a compound including a metal element other than Li and sulfur. The sulfide-based compound may be, for example, a compound including a metal element belonging to Groups 1 to 14 of the periodic table and having an atomic weight of 10 or more and sulfur. The sulfide-based compound may be, for example, $FeS_2$, $VS_2$, NaS, MnS, FeS, NiS, CuS, or any combination thereof. Because the positive active material layer further includes the sulfide-based compound, cycle characteristics of the solid (e.g., all-solid) secondary battery may further be improved. The positive active material layer 12 may include the sulfide-based compound in an amount of 10 wt% or less, 5 wt% or less, 3 wt% or less, or 1 wt% or less based on a total weight of the positive active material layer 12.

**Positive Electrode: Solid Electrolyte**

The positive active material layer 12 may further include, for example, a solid electrolyte. The solid electrolyte may be, for example, a sulfide-based solid electrolyte. The solid electrolyte included in the positive electrode 10 may be the same as or different from a solid electrolyte included in a solid electrolyte layer 30. For detailed descriptions of the solid electrolyte, refer to descriptions of the electrolyte layer 30.

The solid electrolyte included in the positive active material layer 12 may have a smaller average particle diameter D50 than that of a solid electrolyte included in the solid electrolyte layer 30. For example, the average particle diameter D50 of the solid electrolyte included in the positive active material layer 12 may be 90% or less, 80% or less, 70% or less, 60% or less, 50% or less, 40 % or less, 30 % or less, or 20 % or less of the average particle diameter D50 of the solid electrolyte included in the solid electrolyte layer 30. The average particle diameter D50 is, for example, a median particle diameter D50. The median particle diameter D50 is a particle diameter corresponding to a 50% cumulative volume calculated from the smallest particle in a particle size distribution measured, for example, by a laser diffraction method.

An amount of the solid electrolyte may be from about 10 parts by weight to about 60 parts by weight, from about 10 parts by weight to about 50 parts by weight, from about 20 parts by weight to about 50 parts by weight, or from about 30 parts by weight to about 50 parts by weight based on 100 parts by weight of the positive active material layer 12. A too small amount of the solid electrolyte may cause an increase in internal resistance of a positive electrode, and thus cycle characteristics of a secondary battery may deteriorate. A too large amount of the sulfide-based solid electrolyte may cause a decrease in energy density of the secondary battery 1.

**Positive Electrode:Conductive Material**

The positive active material layer 12 may further include a conductive material. The conductive material may be, for example, a carbonaceous conductive material, a metallic conductive material, or any combination thereof. The carbonaceous conductive material may be, for example, graphite, carbon black, acetylene black, Ketjen black, carbon fiber, or any combination thereof, but is not limited thereto, and any carbonaceous conductive materials commonly available in the art may also be utilized. The metallic conductive material may be metal powder, metal fiber, or any combination thereof, but is not limited thereto, and any metallic conductive materials commonly available in the art may also be utilized. An amount of the conductive material included in the positive active material layer 12 may be, for example, from about 1 wt% to about 30 wt%, from about 1 wt% to about 20 wt%, or from about 1 wt% to about 10 wt%, based on the total weight of the positive active material layer 12.

The positive active material layer 12 includes a carbonaceous material and the carbonaceous material may be arranged only in the composite positive active material. The positive active material layer 12 may not additionally include another carbonaceous material other than the carbonaceous material-containing composite positive active material. Because the positive active material layer does not include a separate carbonaceous material, energy density of the positive electrode and the secondary battery 1 may be increased and a manufacturing process thereof may be simplified.

**Positive Electrode:Binder**

The positive active material layer 12 may further include a binder. The binder may be styrene butadiene rubber (SBR), polytetrafluoroethylene, polyvinylidene fluoride, or polyethylene, but is not limited thereto and any binders commonly available in the art may also be utilized. The positive active material layer 12 may include the binder in an amount of, for example, about 1 wt% to about 10 wt% based on a total weight of the positive active material layer 12. The binder may not be provided.

**Positive Electrode:Other Additives**

The positive active material layer 12 may further include, for example, a filler, a coating agent, a dispersant, and an ion-conductive adjuvant in addition to the positive active material, the solid electrolyte, the binder, and the conductive material.

The filler, the coating agent, the dispersant, and the ion-conductive adjuvant included in the positive active material layer 12 may be any suitable materials commonly utilized in electrodes of solid (e.g., all-solid) secondary batteries.

**Positive Electrode:Positive Current Collector**

The positive current collector 11 may be, for example, in the form of a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector 11 may not be provided. The positive current collector 11 may have a thickness, for example average thickness, of, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The positive current collector 11 may include, for example, a base film and a metal layer provided on at least one side (e.g., on both (e.g., opposite) sides) of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The base film may be, for example, an insulator. Because the base film includes an insulating thermoplastic polymer, the base film softens or liquefies in the event of a short circuit to stop the operation a battery thereby inhibiting a rapid increase in currents. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer, acting as an electrochemical fuse, is cut in the event of an overcurrent, to prevent or reduce a short circuit. By controlling a thickness, for example average thickness, of the metal layer, a limiting current and a maximum current may be adjusted. The metal layer may be plated or deposited on the base film. As the thickness, for example average thickness, of the metal layer decreases, the limiting current and/or maximum current of the positive current collector 11 decreases, so that stability of the lithium battery may be improved in the case of occurrence of a short circuit. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, aluminum foil, copper foil, and SUS (stainless steel) foil. By disposing the metal chip on the metal layer and performing welding, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. A metal chip and/or a lead tab may further be added to a portion of the metal layer. The base film may have a thickness, for example average thickness, of, for example, about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. With the thickness of the base film within the described ranges, the weight of the electrode assembly may be reduced more effectively. A melting point of the base film may be, for example, from about 100 °C to about 300 °C, from about 100 °C to about 250 °C, or from about 100 °C to about 200 °C. Because the base film has a melting point within the described ranges, the base film melts during a process of welding the lead tab to be easily bound to the lead tab. To improve adhesion between the base film and the metal layer, surface treatment such as corona treatment may be performed on the base film. A thickness of the metal layer may be, for example, from about 0.01 $\mu$m to about 3 $\mu$m, from about 0.1 $\mu$m to about 3 $\mu$m, from about 0.1 $\mu$m to about 2 $\mu$m, or from about 0.1 $\mu$m to about 1 $\mu$m. With the thickness of the metal layer within the described ranges, stability of the electrode assembly may be obtained while maintaining conductivity thereof. A thickness of the metal chip may be, for example, from about 2 $\mu$m to about 10 $\mu$m, from about 2 $\mu$m to about 7 $\mu$m, or from about 4 $\mu$m to about 6 $\mu$m. With the thickness of the metal chip within the described ranges, the metal layer may be connected to the lead tab more easily. Because the positive current collector 11 has the described structure, the weight of the positive electrode may be reduced, so that energy density of the positive electrode and the solid secondary battery may be increased.

**Positive Electrode: Inactive Member**

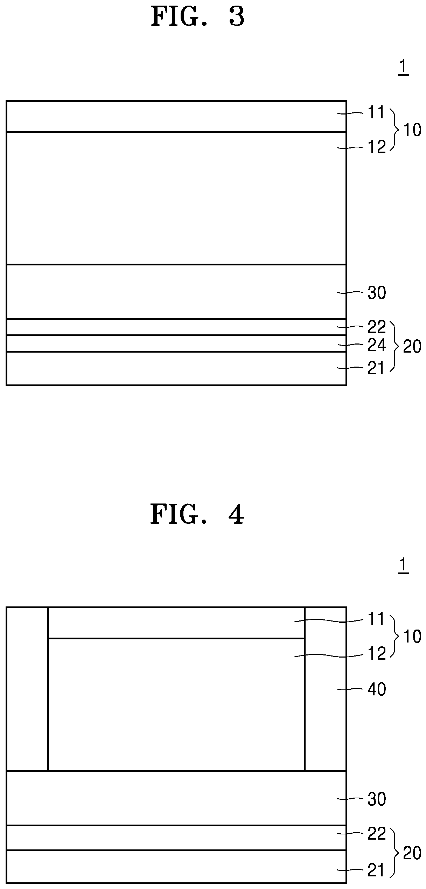

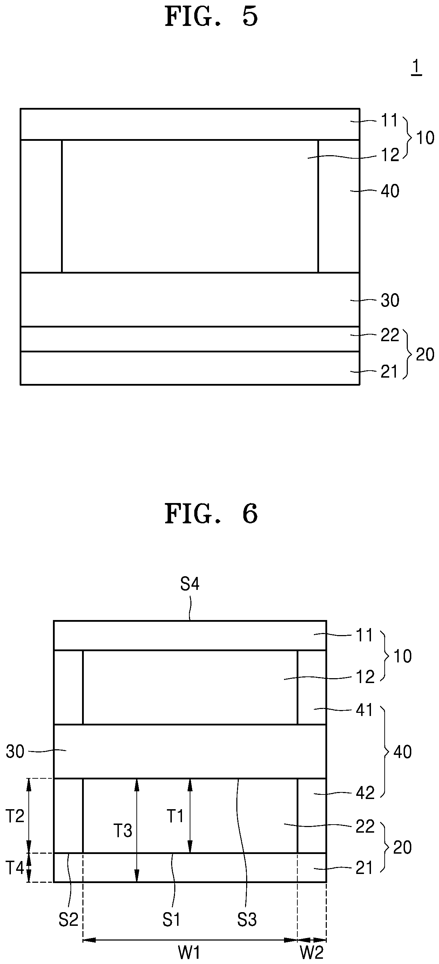

Referring to FIGS. 4 and 5, the positive electrode 10 includes a positive current collector 11 and a positive active material layer 12 provided on side of the positive current collector 11. An inactive member 40 is provided on one side surface of the positive electrode 10. Referring to FIG. 4, the inactive member 40 is provided on one side surface of each of the positive active material layer 12 and the positive current collector 11. Referring to FIG. 5, the inactive member 40 is provided on one side surface of the positive active material layer 12 and between the electrolyte layer 30 and the positive current collector 30 facing the solid electrolyte layer 30. The inactive member 40 is not provided on the side surface of the positive current collector 11. The electrolyte layer 30 may be, for example, a solid electrolyte layer.

Due to the inactive member 40, occurrence of cracks is inhibited in the electrolyte layer 30 during manufacturing and/or charging and discharging of the solid (e.g., all-solid) secondary battery 1, so that cycle characteristics of the solid (e.g., all-solid) secondary battery 1 may be improved. In a solid (e.g., all-solid) secondary battery 1 not including the inactive member 40, a non-substantially uniform pressure is applied to the electrolyte layer 30 in contact with the positive electrode 10 to cause occurrence of cracks in the electrolyte layer 30 during manufacturing and/or charging and discharging of the solid (e.g., all-solid) secondary battery 1, and lithium metal grows thereby to increase the possibility of a short circuit.

In the solid (e.g., all-solid) secondary battery 1, a thickness, for example average thickness, of the inactive member 40 may be greater than a thickness of the positive active material layer 12 or the same as the thickness of the positive active material layer 12. In some embodiments, in the solid (e.g., all-solid) secondary battery 1, the thickness of the inactive member 40 is substantially identical to a thickness of the positive electrode 10. Because the thickness of the inactive member 40 is identical to that of the positive electrode 10, a substantially uniform pressure is applied between the positive electrode 10 and the electrolyte layer 30 and the positive electrode 10 is in sufficiently close contact with the electrolyte layer 30, so that interfacial resistance between the positive electrode 10 and the electrolyte layer 30 may be reduced. In some embodiments, the electrolyte layer 30 is sufficiently sintered during a pressing/manufacturing process of the solid (e.g., all-solid) secondary battery 1, and thus internal resistance of the electrolyte layer 30 and the solid (e.g., all-solid) secondary battery 1 including the same may be reduced.

The inactive member 40 is in contact with the electrolyte layer 30 in a state of being around (e.g., surrounding) side surfaces of the positive electrode 10. Because the inactive member 40 is in contact with the electrolyte layer 30 in a state of being around (e.g., surrounding) side surfaces of the positive electrode 10, cracks, which are caused by a pressure difference in the electrolyte layer 30 not in contact with the positive electrode 10 during a pressing process, may be effectively inhibited. The inactive member 40 being around (e.g., surrounding) the side surfaces of the positive electrode 10 is separated from the negative electrode 20, more specifically, from the first negative active material layer 22. The inactive member 40 is in contact with the electrolyte layer 30 in a state of being around (e.g., surrounding) side surfaces of the positive electrode 10 and is separated from the negative electrode 20. Therefore, the possibility of a short circuit caused by physical contact between the positive electrode 10 and the first negative active material layer 22 or the possibility of a short circuit caused by overcharging of lithium may be inhibited. For example, if (e.g., when) the inactive member 40 is provided on one side surface of the positive active material layer 12 as well as one side surface of the positive current collector 11, the possibility of a short circuit caused by contact between the positive current collector 11 and the negative electrode 20 is inhibited more effectively.

Referring to FIG. 6, the inactive member 40 extends from one side surface of the positive electrode 10 to an end portion of the electrolyte layer 30. By extending the inactive member 40 to the end portion of the electrolyte layer 30, cracks occurring in the end portion of the electrolyte layer 30 may be inhibited. The end portion of the electrolyte layer 30 is the outermost portion in contact with a side surface of the electrolyte layer 30. The inactive member 40 extends to the outermost portion in contact with the side surface of the electrolyte layer 30. The inactive member 40 is separated from the negative electrode 20, more specifically, the first negative active material layer 22. The inactive member 40 extends to the end portion of the electrolyte layer 30 but not in contact with the negative electrode 20. The inactive member 40 fills a space between one side surface of the positive electrode 10 and the end portion of the electrolyte layer 30.

Referring to FIG. 6, a width of the inactive member 40 extending from one side surface of the positive electrode 10 to the end portion of the electrolyte layer 30 is, for example, about 1 % to about 30 %, about 1 % to about 25 %, about 1 % to about 20 %, about 1 % to about 15 %, about 1 % to about 10 %, or about 1 % to about 5 % of a width the positive electrode 10 between one side surface and the other side surface facing the one side surface. If (e.g., when) the width of the inactive member 40 is too large, energy density of the solid (e.g., all-solid) secondary battery 1 decreases. If (e.g., when) the width of the inactive member 40 is too small, the effects of the inactive member 40 are negligible.

An area of the positive electrode 10 is smaller than an area of the electrolyte layer 30 in contact with the positive electrode 10. The inactive member 40 arranged to surround side surfaces of the positive electrode 10 compensates for a difference in area between the positive electrode 10 and the electrolyte layer 30. Because the area of the inactive member 40 compensates for the difference between the area of the positive electrode 10 and the area of the electrolyte layer 30, cracks of the electrolyte layer 30 caused by a pressure difference during a pressing process may be effectively inhibited. For example, a sum of the area of the positive electrode 10 and the area of the inactive member 40 is identical to the area of the electrolyte layer 30. The electrolyte layer 30 may be, for example, a solid electrolyte layer.

The amount of the positive electrode 10 is, for example, less than 100 %, 99 % or less, 98 % or less, 97 % or less, 96 % or less, or 95 % or less of the area of the electrolyte layer 30. The area of the positive electrode 10 is, for example, from about 50 % but less than about 100 %, from about 50 % to about 99 %, from about 55 % to about 98 %, from about 60 % to about 97 %, from about 70 % to about 96 %, from about 80 % to about 95 %, or from about 85 % to about 95 % of the area of the electrolyte layer 30.

If (e.g., when) the area of the positive electrode 10 is identical to or greater than the area of the electrolyte layer 30, the possibility of a short circuit caused by physical contact between the positive electrode 10 and the first negative electrode active material layer 22 or a short circuit caused by overcharging of lithium increases. The area of the positive electrode 10 is, for example, identical to the area of the positive active material layer 12. The area of the positive electrode 10 is, for example, identical to the area of the positive current collector 11.

The area of the inactive member 40 is, for example, 50 % or less, 40 % or less, 30 % or less, 20 % or less, or 10 % or less of the area of the positive electrode 10. The area of the inactive member 40 is, for example, from about 1 % to about 50 %, from about 5 % to about 40 %, from about 5 % to about 30 %, from about 5 % to about 20 %, or from about 5 % to about 15 % of the area of the positive electrode 10.

The area S1 of the positive electrode 10 is smaller than an area S4 of the negative current collector 21. The area S1 of the positive electrode 10 is, for example, less than 100 %, 99 % or less, 98 % or less, 97 % or less, 96 % or less, or 95 % or less of the area S4 of the negative current collector 21. The area S1 of the positive electrode 10 is, for example, from about 50 % but less than about 100 %, from about 50 % to about 99 %, from about 55 % to about 98 %, from about 60 % to about 97 %, from about 70 % to about 96 %, from about 80 % to about 95 %, or from about 85 % to about 95 % of the area S4 of the negative current collector 21. The area S4 of the negative current collector 21 is, for example, identical to the area of the negative electrode 20. The area S4 of the negative current collector 21 is, for example, identical to the area of the first negative active material layer 22.

As utilized herein, the "same" area, length, width, thickness, and/or shape include all cases having "substantially same" area, length, width, thickness, and/or shape except that the area, length, thickness, and/or shape are intentionally modified. The "same" area, length, width, and/or thickness includes, for example, a range of unintended differences less than 3 %, less than 2 %, less than 1 %, less than 0.5 %, or less than 0.1 % in the area, length, width, and/or thickness between subjects to be compared.

A thickness, for example average thickness, of the inactive member 40 is, for example, greater than a thickness of the first negative active material layer 22. The thickness, for example average thickness, of the first negative active material layer 22 is, for example, 50 % or less, 40 % or less, 30 % or less, 20 % or less, or 10 % or less of a thickness of the inactive member 40. The thickness of the first negative active material layer 22 may be from about 1 % to about 50 %, from about 1 % to about 40 %, from about 1 % to about 30 %, from about 1 % to about 20 %, or from about 1 % to about 10 % of the thickness of the inactive member 40.

The inactive member 40 may be a gasket. By utilizing the gasket as the inactive member 40, cracks caused in the electrolyte layer 30 by a pressure difference during a pressing process may be more effectively inhibited.

The inactive member 40 may have, for example, a single-layer structure. In some embodiments, the inactive member 40 may have a multilayer structure. In the inactive member 40 having a multilayer structure, each layer may have a different composition. The inactive member 40 having a multilayer structure such as a two-layer structure, a three-layer structure, a four-layer structure, or a five-layer structure. The inactive member 40 having a multilayer structure may include, for example, at least one adhesive layer and at least one support layer. The adhesive layer effectively prevents separation of the positive electrode 10 from the electrolyte layer 30 caused by a volume change of the positive electrode 10 during a charging and discharging process of the solid (e.g., all-solid) secondary battery 1 and provides binding strength between the support layer and other layers, so as to increase strength of a film of the inactive member 40. The support layer provides a supporting force to the inactive member 40 to prevent or reduce non-substantially uniform application of a pressure to the electrolyte layer 30 during a pressing process or a charging and discharging process and prevent or reduce deformation of the solid (e.g., all-solid) secondary battery 1.

The inactive member 40 may be, for example, a flame-retardant member. Because the flame-retardant inactive member provides flame retardancy, thermal runaway and ignition of the solid (e.g., all-solid) secondary battery 1 may be prevented or reduced. As a result, safety of the solid (e.g., all-solid) secondary battery 1 may further be improved. Because the flame-retardant inactive member absorbs moisture remaining in the solid (e.g., all-solid) secondary battery 1, deterioration of the solid (e.g., all-solid) secondary battery 1 is prevented or reduced so as to improve lifespan characteristics of the solid (e.g., all-solid) secondary battery 1.

The flame-retardant inactive member includes, for example, a matrix and a filler. The matrix may include, for example, a substrate and a reinforcement. The matrix includes, for example, a fibrous substrate and a fibrous reinforcement. By including the substrate, the matrix may have elasticity. Therefore, the matrix effectively accommodates a volume change during charging and discharging of the solid (e.g., all-solid) secondary battery 1 and may be arranged in one or more suitable positions. The substrate included in the matrix includes, for example, a first fibrous material. Because the substrate includes the first fibrous material, a volume change of the positive electrode 10 is effectively accommodated during charging and discharging of the solid (e.g., all-solid) secondary battery 1, and deformation of the inactive member 40 caused by the volume change of the positive electrode 10 may be inhibited. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Because the first fibrous material is an insulating material, a short circuit between the positive electrode 10 and the negative electrode 20 caused by lithium dendrite and/or the like formed during a charging and discharging process of the solid (e.g., all-solid) secondary battery 1 may be effectively inhibited. The first fibrous material includes, for example, at least one selected from among pulp fibers, insulating polymer fibers, and ion-conductive polymer fibers. Because the matrix includes the reinforcement, strength of the matrix is increased. Therefore, the matrix may prevent or reduce an excessive volume change during charging and discharging of the solid (e.g., all-solid) secondary battery 1 and prevent or reduce deformation of the solid (e.g., all-solid) secondary battery. The reinforcement included in the matrix includes, for example, a second fibrous material. Because the reinforcement includes the second fibrous material, strength of the matrix may be increased more uniformly. The second fibrous material is, for example, a material having an aspect ratio or 3 or more, 5 or more, or 10 or more. The first fibrous material is, for example, a material having an aspect ratio of 3 to 100, 5 to 100, or 10 to 100. The second fibrous material is, for example, a flame-retardant material. Because the second fibrous material is the flame-retardant material, ignition caused during a charging and discharging process of the solid (e.g., all-solid) secondary battery 1 or by thermal runaway due to an external impact may be effectively prevented or reduced. The second fibrous material is, for example, glass fibers, metal oxide fibers, and ceramic fibers.

The flame-retardant inactive member includes a filler in addition to the matrix. The filler may be located inside the matrix, on the surface of the matrix, or both (e.g., simultaneously) inside and on the surface of the matrix. The filler is, for example, an inorganic material. The filler included in the flame-retardant inactive member is, for example, a moisture getter. The filler absorbs moisture, for example, at a temperature 100 °C to remove moisture remaining in the solid (e.g., all-solid) secondary battery 1, thereby preventing or reducing deterioration of the solid (e.g., all-solid) secondary battery 1. In some embodiments, if (e.g., when) a temperature of the solid (e.g., all-solid) secondary battery 1 exceeds 150 °C during a charging and discharging process of the solid (e.g., all-solid) secondary battery 1 or due to thermal runaway caused by an external impact, the filler releases the absorbed moisture, thereby effectively inhibiting ignition of the solid (e.g., all-solid) secondary battery 1. The fille is, for example, a flame retardant. The filler is, for example, a metal hydroxide having moisture absorbency. The metal hydroxide included in the filler is, for example, $Mg(OH)_2$, $Fe(OH)_3$, $Sb(OH)_3$, $Sn(OH)_4$, $Tl(OH)_3$, $Zr(OH)_4$, $Al(OH)_3$, or any combination thereof. An amount of the filler included in the flame-retardant inactive member is, for example, from 10 to 80 parts by weight, from 20 to 80 parts by weight, from 30 to 80 parts by weight, from 40 to 80 parts by weight, from 50 to 80 parts by weight, from 60 to 80 parts by weight, or from 65 to 80 parts by weight based on 100 parts by weight of the flame-retardant inactive member 40.

The flame-retardant inactive member may further include, for example, a binder. The binder may include, for example, a curable polymer or a non-curable polymer. The curable polymer is a polymer cured by heat and/or pressure. The curable polymer is, for example, a solid at room temperature. The flame-retardant inactive member 40 includes, for example, a thermo-pressure curable film and/or a cured product thereof. The thermo-pressure curable polymer is, for example, TSA-66 manufactured by Toray.

The flame-retardant inactive member may further include another material in addition to the described substrate, reinforcement, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and polyethylene (PE).

A density of the substrate or the reinforcement included in the flame-retardant inactive member may be, for example, 10 % to 300 %, 10 % to 150 %, 10 % to 140 %, 10 % to 130 %, or 10 % to 120 % of the density of the positive active material included in the positive active material layer 12.

The inactive member 40 is a member not including an electrochemically active material, such as an electrode active material. The electrode active material is a material that allows intercalation/deintercalation of lithium. The inactive member 40 is formed of any material commonly utilized in the art, other than the electrode active material.

## Solid (e.g., All-solid) Secondary Battery

A solid (e.g., all-solid) secondary battery according to embodiments includes the described positive electrodepositive electrode; a negative electrode; and an electrolyte layer provided between the positive electrodepositive electrode and the negative electrode. The negative electrode includes a negative current collector and a first negative active material layer provided on one side of the negative current collector.

The negative electrode includes a negative current collector, a lithium host layer provided on one side of the negative current collector, and a inactive member provided on one side surface of the negative electrode, wherein the lithium host layer includes a lithium host structure, the lithium host structure includes at least one lithium host, and the lithium host includes a carbonaceous lithium host, a metallic lithium host, a polymeric lithium host, or any combination thereof.

A lithium-plated layer may be formed inside and/or on the surface of the lithium host layer.

The solid (e.g., all-solid) secondary battery includes a lithium-containing sulfide-based positive active material as a positive active material. Therefore, discontinuity of an ion and/or electron conduction path caused by a volume increase during initial discharging of a lithium-free sulfide-based positive active material, such as sulfur (S), may be prevented or reduced. By preventing or reducing the discontinuity of the ion and/or electron conduction path, cycle characteristics of the solid (e.g., all-solid) secondary battery may be improved.

Because the solid (e.g., all-solid) secondary battery includes the lithium host layer in the negative electrode, the lithium host serves as a support during a lithium plating process of the negative electrode, thereby inhibiting non-uniformity of lithium plating. During a charging and discharging process of the solid (e.g., all-solid) secondary battery, formation and growth of lithium dendrite and/or dead lithium may be inhibited. As a result, deterioration of the solid (e.g., all-solid) secondary battery may be inhibited and cycle characteristics may be improved.

Because the solid (e.g., all-solid) secondary battery includes the lithium host layer in the negative electrode, a rapid volume change of the negative electrode may be inhibited during a charging and discharging process of the solid (e.g., all-solid) secondary battery. By inhibiting the rapid volume change of the negative electrode, deterioration of the solid (e.g., all-solid) secondary battery caused by a volume change of the solid (e.g., all-solid) secondary battery during a charging and discharging process of the solid (e.g., all-solid) secondary battery, and cycle characteristics may be improved.

Because the solid (e.g., all-solid) secondary battery includes a solid electrolyte layer, migration of a polysulfide generated during charging and discharging of the lithium-containing sulfide-based positive active material to the negative electrode is blocked. Therefore, a side reaction between the polysulfide and the negative active material is inhibited.

By locating the inactive member on one side surface of the negative electrode, formation and growth of lithium dendrite and/or short circuits with the positive electrode by lithium metal melting at a high temperature are more effectively inhibited during charging and discharging of the solid (e.g., all-solid) secondary battery. As a result, a short circuit of the solid (e.g., all-solid) secondary battery is prevented or reduced and lifespan characteristics thereof are improved.

Referring to FIGS. 3 to 6, the solid (e.g., all-solid) secondary battery 1 includes: a positive electrode 10; a negative electrode 20; and an electrolyte layer 30 provided between the positive electrode 10 and the negative electrode 20. The negative electrode 20 includes a negative current collector 21 and a first negative active material layer 22 provided on one side of the negative current collector 21.

## Positive Electrode

Refer to the positive electrode as described elsewhere herein.

**Negative Electrode**

**Negative Electrode: Negative Active Material**

Referring to FIGS. 3 to 6, the negative electrode 20 includes the first negative active material layer 22. The first negative active material layer 22 includes, for example, a negative active material and a binder.

The negative active material included in the first negative active material layer 22 is, for example, a material for negative electrodes allowing formation of an alloy or compound with lithium.

The negative active material included in the first negative active material layer 22 may be, for example, in the form of particles. The negative active material in the form of particles may have an average particle diameter (or size) of, for example, 4 $\mu$m or less, 3 $\mu$m or less, 2 $\mu$m or less, 1 $\mu$m or less, 500 nm or less, 300 nm or less, or 100 nm or less. The negative active material in the form of particles may have an average particle diameter of, for example, about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. With the average particle diameter of the negative active material within the ranges described, reversible absorbing and/or desorbing of lithium may occur more easily during charging and discharging. The average particle diameter of the negative active material is, for example, a median diameter D50 measured utilizing a laser particle size analyzer.

The negative active material included in the first negative active material layer 22 includes, for example, at least one selected from among a carbonaceous negative active material and a metal or metalloid negative active material.

The carbonaceous negative active material includes, for example amorphous carbon, crystalline carbon, porous carbon, or any combination thereof.

The carbonaceous negative active material is, for example, amorphous carbon. The amorphous carbon may be, for example, carbon black (CB), acetylene black (AB), furnace black (FB), Ketjen black (KB), or graphene, but is not limited thereto, and any carbon classified as amorphous carbon in the art may also be utilized. Amorphous carbon is carbon that does not have crystallinity or has very low crystallinity and is distinguished from crystalline carbon or graphite-based carbon.

The carbonaceous negative active material may be, for example, porous carbon. A volume of pores in the porous carbon is, for example, from about 0.1 cubic centimeter per gram (cc/g) to about 10.0 cc/g, from about 0.5 cc/g to about 5 cc/g, or from about 0.1 cc/g to about 1 cc/g. The porous carbon may have an average pore diameter of, for example, about 1 nm to about 50 nm, about 1 nm to about 30 nm, or about 1 nm to about 10 nm. The porous carbon may have a BET specific surface area of, for example, about 100 square meter per gram (m$^2$/g) to about 3000 m$^2$/g.

The metal or metalloid negative active material includes at least one selected from among gold (Au), platinum (Pt), palladium (Pd), silicon (Si), silver (Ag), aluminum (Al), bismuth (Bi), tin (Sn), and zinc (Zn), but is not limited thereto, and any suitable metal negative active materials or metalloid negative active materials capable of forming an alloy or compound with lithium may also be utilized. For example, because nickel (Ni) does not form an alloy with lithium, Ni is not a metal negative active material.

The first negative active material layer 22 includes one type or kind of the negative active materials or a mixture of a plurality of different negative active materials among these negative active materials. For example, the first negative active material layer 22 includes only amorphous carbon or includes at least one metal selected from among gold (Au), platinum (Pt), palladium (Pd), silicon (Si), silver (Ag), aluminum (Al), bismuth (Bi), tin (Sn), and zinc (Zn). In some embodiments, the first negative active material layer 22 includes a mixture of amorphous carbon and at least one metal selected from among gold (Au), platinum (Pt), palladium (Pd), silicon (Si), silver (Ag), aluminum (Al), bismuth (Bi), tin (Sn), and zinc (Zn). A mixing ratio of amorphous carbon and a metal such as gold in the mixture is a weight ratio, for example, from about 99:1 to about 1:99, from about 10:1 to about 1:2, from about 5:1 to about 1:1, or from 4:1 to 2:1. However, the mixing ratio is not limited thereto but selected in accordance with required characteristics of the solid (e.g., all-solid) secondary battery 1. Due to the composition of the negative active material, cycle characteristics of the solid (e.g., all-solid) secondary battery 1 may further be improved.

The negative active material included in the first negative active material layer 22 includes, for example, a mixture of first particles formed of amorphous carbon and second particles formed of a metal or metalloid. The metal or metalloid includes, for example, at least one selected from among gold (Au), platinum (Pt), palladium (Pd), silicon (Si), silver (Ag), aluminum (Al), bismuth (Bi), tin (Sn), and zinc (Zn). In some embodiments, the metalloid is a semiconductor. An amount of the second particles may be from about 1 to about 99 wt%, from about 1 to about 60 wt%, from about 8 to about 60 wt%, from about 10 to about 50 wt%, from about 15 to about 40 wt%, or from about 20 to about 30 wt% based on a total weight of the mixture. Due to the amount of the second particles within the ranges described, cycle characteristics of the solid secondary battery 1 are further improved.

In some embodiments, the first negative active material layer 22 includes a composite negative active material. The composite negative active material may include, for example, a carbonaceous support and a metallic negative active material supported on the carbonaceous support. The composite negative active material may have, for example, a structure in which silver (Ag) is supported on carbon particles. Because the composite negative active material has such a structure, localization of the metallic negative active material may be inhibited in the first negative active material layer and substantially uniform distribution may be obtained. As a result, cycle characteristics of the solid (e.g., all-solid) secondary battery 1 including the first negative active material layer 22 may further be improved.

The metallic negative active material supported on the carbonaceous support may include, for example, a metal, a metal oxide, a composite of a metal and a metal oxide, or any combination thereof. The metal includes, for example, at least one selected from among gold (Au), platinum (Pt), palladium (Pd), silicon (Si), silver (Ag), aluminum (Al), bismuth (Bi), tin (Sn), tellurium (Te), and zinc (Zn). The metal oxide includes, for example, at least one selected from among a gold (Au) oxide, a platinum (Pt) oxide, a palladium (Pd) oxide, a silicon (Si) oxide, a silver (Ag) oxide, an aluminum (Al) oxide, a bismuth (Bi) oxide, a tin (Sn) oxide, a tellurium (Te) oxide, and a zinc (Zn) oxide. The metal oxide may include, for example, $Au_xO_y$ (where $0<x\leq2$ and $0<y\leq3$), $Pt_xO_y$ (where $0<x\leq1$ and $0<y\leq2$), $Pd_xO_y$ (where $0<x\leq1$ and $0<y\leq1$), $Si_xO_y$ (where $0<x\leq1$ and $0<y\leq2$), $Ag_xO_y$ (where $0<x\leq2$ and $0<y\leq1$), $Al_xO_y$ (where $0<x\leq2$ and $0<y\leq3$), $Bi_xO_y$ (where $0<x\leq2$ and $0<y\leq3$), $Sn_xO_y$ (where $0<x\leq1$ and $0<y\leq2$), $Te_xO_y$ (where $0<x\leq1$ and $0<y\leq3$), $Zn_xO_y$ (where $0<x\leq1$ and $0<y\leq1$), or any combination thereof. The composite of a metal and a metal oxide may include, for example, a composite of Au and $Au_xO_y$ (where $0<x\leq2$ and $0<y\leq3$), a composite of Pt and $Pt_xO_y$ (where $0<x\leq1$ and $0<y\leq2$), a composite of Pd and $Pd_xO_y$ (where $0<x\leq1$ and $0<y\leq1$), a composite of Si and $Si_xO_y$ (where $0<x\leq1$ and $0<y\leq2$), a composite of Ag and $Ag_xO_y$ (where $0<x\leq2$ and $0<y\leq1$), a composite of Al and $Al_xO_y$ (where $0<x\leq2$ and $0<y\leq3$), a composite of Bi and $Bi_xO_y$ (where $0<x\leq2$ and $0<y\leq3$), a composite of Sn and $Sn_xO_y$ (where $0<x\leq1$ and $0<y\leq2$), a composite of Te and $Te_xO_y$ (where $0<x\leq1$ and $0<y\leq3$), a composite of Zn and $Zn_xO_y$ (where $0<x\leq1$ and $0<y\leq1$), or any combination thereof.

The carbonaceous support is, for example, amorphous carbon. The amorphous carbon may be, for example, carbon black (CB), acetylene black (AB), furnace black (FB), Ketjen black (KB), graphene, activated carbon, carbon nanofiber (CNF), or carbon nanotube (CNT), but is not limited thereto, and any carbon classified as amorphous carbon in the art may also be utilized. Amorphous carbon is carbon that does not have crystallinity or has very low crystallinity and is distinguished from crystalline carbon or graphite-based carbon. The carbonaceous material is, for example, a carbonaceous negative active material.

The composite negative active material is, for example, in the form of particles. The composite negative active material in the form of particles may have a particle diameter of, for example, about 10 nm to about 4 μm, about 10 nm to about 1 μm, about 10 nm to about 500 nm, about 10 nm to about 200 nm, or about 10 nm to about 100 nm. Due to the average particle diameter of the composite negative active material within the ranges described, reversible absorbing and/or desorbing of lithium may occur more easily during charging and discharging. The metallic negative active material supported on the support may be, for example, in the form of particles. The metallic negative active material may have a particle diameter of, for example, about 1 nm to about 200 nm, about 1 nm to about 150 nm, about 5 nm to about 100 nm, or about 10 nm to about 50 nm. The carbonaceous support may be, for example, in the form of particles. The carbonaceous support may have a particle diameter of, for example, about 10 nm to about 2 μm, about 10 nm to about 1 μm, about 10 nm to about 500 nm, about 10 nm to about 200 nm, or about 10 nm to about 100 nm. As the carbonaceous support has the particle diameter within the ranges described, the carbonaceous support may be more uniformly arranged in the first negative active material layer. The carbonaceous support may be, for example, nanoparticles having a particle diameter of 500 nm or less. The particle diameter of the composite negative active material, the particle diameter of the metallic negative active material, and the particle diameter of the carbonaceous support are, for example, average particle diameters. The average particle diameter is, for example, a median diameter D50 measured utilizing a laser particle size analyzer. In some embodiments, the average particle diameter may be determined, for example, automatically utilizing software or manually based on manuals from an electron microscope image.

**Negative Electrode:Binder**

The binder included in the first negative active material layer 22 may be, for example, styrene butadiene rubber (SBR), polytetrafluoroethylene, polyvinylidene fluoride, polyethylene, vinylidene fluoride/hexafluoropropylene copolymer, polyacrylonitrile, and/or polymethylmethacrylate, but is not limited thereto, and any binders commonly available in the art may also be utilized. The binder may be utilized alone or a combination of a plurality of different binders may be utilized.

Because the first negative active material layer 22 includes the binder, the first negative active material layer 22 is stabilized on the negative current collector 21. In some embodiments, cracks may be inhibited in the first negative active material layer 22 during a charging and discharging process, although a volume and/or a relative position of the first negative active material layer 22 changes. For example, if (e.g., when) the first negative active material layer 22 does not include a binder, the first negative active material layer 22 is easily separated from the negative current collector 21. Because the first negative active material layer 22 is separated from the negative current collector 21, an exposed region of the negative current collector 21 is brought into contact with the electrolyte layer 30, thereby increasing the possibility of occurrence of a short circuit. The first negative active material layer 22 is prepared by, for example, applying a slurry, in which a material constituting the first negative active material layer 22 is dispersed, to the negative current collector 21, and drying the slurry. By adding the binder to the first negative active material layer 22, the negative active material may be stably dispersed in the slurry. For example, if (e.g., when) the slurry is applied to the negative current collector 21 by screen printing, it is possible to suppress or reduce clogging of a screen (e.g., clogging by agglomerates of the negative active material).

### Negative Electrode:Other Additives

The first negative active material layer 22 may further include additives utilized in solid (e.g., all-solid) secondary batteries, such as a filler, a coating agent, a dispersant, and an ion-conductive adjuvant.

### Negative Electrode:Solid Electrolyte

The first negative active material layer 22 may further include a solid electrolyte. The solid electrolyte may be selected from the solid electrolytes included in the electrolyte layer 30. The solid electrolyte included in the first negative active material layer 22 may serve as a reaction site where formation of lithium metal is initiated in the first negative active material layer 22, as a space for storing the formed lithium metal, or as a path for delivering lithium ions. The solid electrolyte may not be provided.

In the first negative active material layer 22, for example, the amount of the solid electrolyte may be higher in an area adjacent to the electrolyte layer 30 and may be lower in an area adjacent to the negative current collector 21. In the first negative active material layer 22, the solid electrolyte may have, for example, a concentration gradient such that the concentration decreases from an area adjacent to the electrolyte layer 30 to an area adjacent to the negative current collector 21.

### Negative Electrode:First Negative Active Material Layer

A ratio B/A of an initial charging capacity B of the first negative active material layer 22 to an initial charging capacity A of the positive active material layer is from about 0.005 to about 0.45. The initial charging capacity of the positive active material layer 12 is determined at a maximum charging voltage relative $Li/Li^+$ from a 1st open circuit voltage. The initial charging capacity of the first negative active material layer 22 is determined at 0.01 V relative to $Li/Li^+$ from a 2nd open circuit voltage.

The maximum charging voltage is determined by a type or kind of the positive active material. The maximum charging voltage may be, for example, 1.5 V, 2.0 V, 2.5 V, 3.0 V, 3.5 V, 4.0 V, 4.2 V, or 4.3 V. For example, a maximum charging voltage of the $Li_2S$ or $Li_2S$ composite may be 2.5 V relative to $Li/Li^+$. For example, the maximum charging voltage of the $Li_2S$ or $Li_2S$ composite may be 3.0 V relative to $Li/Li^+$. The ratio B/A of the initial charging capacity B of the first negative active material layer 22 to the initial charging capacity A of the positive active material layer may be, for example, from about 0.01 to about 0.3, from about 0.01 to about 0.2, or from about 0.05 to about 0.1. The initial charging capacity (milliampere hour (mAh)) of the positive active material layer 12 may be obtained by multiplying a charge specific capacity (milliampere hour per gram (mAh/g)) of the positive active material by a mass (gram (g)) of the positive active material in the positive active material layer 12. If (e.g., when) utilizing one or more suitable types (kinds) of positive active materials, charge specific capacity×mass values for all of the positive active materials are calculated respectively, and a sum of the values is regarded as an initial charging capacity of the positive active material layer 12. The initial charging capacity of the first negative active material layer 22 is calculated in substantially the same manner. The initial charging capacity of the first negative active material layer 22 is obtained by multiplying a charge specific capacity (mAh/g) of the negative active material by a mass of the negative active material of the first negative active material layer 22. If (e.g., when) utilizing one or more suitable types (kinds) of negative active materials, charge specific capacity×mass values for all of the negative active materials are calculated respectively, and a sum of the values is regarded as the initial charging capacity of the first negative active material layer 22. The charge specific capacity of the positive active material and the negative active material may be measured by utilizing solid (e.g., all-solid) half-cells to which lithium metal is utilized as a counter electrode. The initial charging capacities of the positive active material layer 12 and the first negative active material layer 22 may be directly measured respectively at a constant current density, e.g., 0.1 milliampere per square centimeter (mA/cm²), by utilizing a solid (e.g., all-solid) half-cell. The measurement may be performed on the positive electrode with an operating voltage from the 1st open circuit voltage (OCV) to the maximum charging voltage, e.g., 3.0 V (vs. $Li/Li^+$). The measurement may be performed on the negative electrode, e.g., lithium metal, with an operating voltage from the 2nd open circuit voltage (OCV) to 0.01 V. For example, a solid (e.g., all-solid) half-cell including the positive active material layer may be charged at a constant current of 0.1 mA/cm² from the 1st open circuit voltage to 3.0 V, and the solid (e.g., all-solid) half-cell including the first negative active material layer may be charged at a constant current of 0.1 mA/cm² from the 2nd open circuit voltage to 0.01 V. A current density during the charging at the constant current may be, for example, 0.2 mA/cm² or 0.5 mA/cm². A solid (e.g., all-solid) half-cell including the positive active material layer may be charged, for example, from the 1st open

circuit voltage to 2.5 V, 2.0 V, 3.5 V, or 4.0 V. The maximum charging voltage of the positive active material may be determined by a maximum voltage of a battery satisfying safety conditions according to JISC8712:2015 of the Japanese Standards Association.

If (e.g., when) the first negative active material layer 22 has a too low initial charging capacity, the thickness of the first negative active material layer 22 becomes too small, and thus lithium dendrite formed between the first negative active material layer 22 and the negative current collector 21 during repeated charging and discharging processes breaks the first negative active material layer 22, making it difficult to improve cycle characteristics of the solid (e.g., all-solid) secondary battery 1. If (e.g., when) the first negative active material layer 22 has a too high charging capacity, energy density of the solid (e.g., all-solid) secondary battery 1 decreases, and thus internal resistance of the solid (e.g., all-solid) secondary battery 1 is increased by the first negative active material layer 22, making it difficult to improve cycle characteristics of the solid (e.g., all-solid) secondary battery 1.

A thickness of the first negative active material layer 22 is, for example, 50 % or less, 40 % or less, 30 % or less, 20 % or less, 10 % or less, or 5 % or less of a thickness of the positive active material layer 12. The thickness of the first negative active material layer 22 is, for example, 1 % to 50%, from about 1 % to about 40 %, from about 1 % to about 30 %, from about 1 % to about 20 %, from about 1 % to about 10 %, or from about 1 % to about 5 % of the thickness of the positive active material layer 12. The thickness of the first negative active material layer 22 is, for example, from about 1 $\mu$m to about 20 $\mu$m, from about 2 $\mu$m to about 15 $\mu$m, or from about 3 $\mu$m to about 10 $\mu$m. If (e.g., when) the first negative active material layer 22 has a too small thickness, lithium dendrite formed between the first negative active material layer 22 and the negative current collector 21 breaks the first negative active material layer 22, making it difficult to improve cycle characteristics of the solid (e.g., all-solid) secondary battery 1. If (e.g., when) the first negative active material layer 22 has a too large thickness, energy density of the solid (e.g., all-solid) secondary battery 1 decreases, internal resistance of the solid (e.g., all-solid) secondary battery 1 is increased by the first negative active material layer 22, making it difficult to improve cycle characteristics of the solid (e.g., all-solid) secondary battery 1. As the thickness of the first negative active material layer 22 decreases, an initial charging capacity of the first negative active material layer 22 also decreases.

**Negative Electrode:Second Negative Active Material Layer**

Referring to FIG. 3, the solid (e.g., all-solid) secondary battery 1 further includes, for example, a second negative active material layer 24 provided between the negative current collector 21 and the first negative active material layer 22 after charging. The second negative active material layer 24 is a metal layer including lithium or a lithium alloy. The metal layer includes lithium or a lithium alloy. Therefore, the second negative active material layer 24, as a metal layer including lithium, serves as a reservoir of lithium. The lithium alloy is, for example, an Li-Al alloy, an Li-Sn alloy, an Li-In alloy, an Li-Ag alloy, an Li-Au alloy, an Li-Zn alloy, an Li-Ge alloy, or an Li-Si alloy, but is not limited thereto, and any lithium alloy commonly available in the art may also be utilized. The second negative active material layer 24 may be formed of one of the alloys alone, lithium, or a combination of one or more suitable types (kinds) of alloys may be utilized. The second negative active material layer 24 is, for example, a plated layer. For example, the second negative active material layer 24 is plated between the first negative active material layer 22 and the negative current collector 21 during a charging and discharging process of the solid (e.g., all-solid) secondary battery 1.

A thickness of the second negative active material layer 24 is not particularly limited, but may be, for example, from about 1 $\mu$m to about 500 $\mu$m, from about 1 $\mu$m to about 200 $\mu$m, from about 1 $\mu$m to about 150 $\mu$m, from about 1 $\mu$m to about 100 $\mu$m, or from about 1 $\mu$m to about 50 $\mu$m. If (e.g., when) the thickness of the second negative active material layer 24 is too small, the function of the second negative active material layer 24 as a reservoir of lithium is difficult to obtain. If (e.g., when) the thickness of the second negative active material layer 24 is too large, the mass and volume of the solid (e.g., all-solid) secondary battery 1 increase, and thus cycle characteristics of the solid (e.g., all-solid) secondary battery 1 may deteriorate.

In some embodiments, in the solid (e.g., all-solid) secondary battery 1, the second negative active material layer 24 may be provided between the negative current collector 21 and the first negative active material layer 22 before assembling the solid (e.g., all-solid) secondary battery 1. If (e.g., when) the second negative active material layer 24 is provided between the negative current collector 21 and the first negative active material layer 22 before assembling the solid (e.g., all-solid) secondary battery 1, the second negative active material layer 24, as a metal layer including lithium, serves as a reservoir of lithium. For example, before assembling the solid (e.g., all-solid) secondary battery 1, a lithium foil may be provided between the negative current collector 21 and the first negative active material layer 22.

If (e.g., when) the second negative active material layer 24 is plated during charging after assembling the solid (e.g., all-solid) secondary battery 1, energy density of the solid (e.g., all-solid) secondary battery 1 increases because the second negative active material layer 24 is not included while the solid (e.g., all-solid) secondary battery 1 is assembled. While the solid (e.g., all-solid) secondary battery 1 is charged, charging is performed to exceed the charging capacity of the first negative active material layer 22. In some embodiments, the first negative active material layer 22 is overcharged. During initial charging, lithium is absorbed to the first negative active material layer 22. The negative active material included in the first negative active material layer 22 forms an alloy or compound with lithium ions that have migrated from the positive electrode 10. If (e.g., when) the first negative active material layer 22 is overcharged to exceed the capacity thereof, lithium is plated on a rear surface of the first negative active material layer 22, i.e., between the negative current collector 21 and the first negative active material layer 22, and a metal layer corresponding to the second negative active material layer 24 is formed by the plated lithium. The second negative active material layer 24 is a metal layer mainly composed of lithium (i.e., lithium metal). These results are obtained because the negative active material included in the first negative active material layer 22 includes a material forming an alloy or compound with lithium. During discharging, lithium of the first negative active material layer 22 and the second negative active material layer 24, i.e., the metal layer, is ionized to migrate in a direction toward the positive electrode 10. Therefore, it is possible to utilize lithium as a negative active material in the solid (e.g., all-solid) secondary battery 1. In some embodiments, because the second negative active material layer 24 is coated with the first negative active material layer 22, the first negative active material layer 22 serves as a protective layer for the second negative active material layer 24, i.e., the metal layer, to prevent or reduce formation and growth of lithium dendrite. Therefore, a short circuit and capacity reduction are inhibited in the solid (e.g., all-solid) secondary battery 1, and thus cycle characteristics of the solid (e.g., all-solid) secondary battery 1 are improved. In some embodiments, if (e.g., when) the second negative active material layer 24 is provided by charging after assembling the solid (e.g., all-solid) secondary battery 1, the negative electrode 20, i.e., the negative current collector 21, the first negative active material layer 22, and a region therebetween, is a Li-free region not including lithium (Li) in the early state of charging or after completely discharging the solid (e.g., all-solid) secondary battery 1.

**Negative Electrode: Negative Current Collector**

The negative current collector 21 may be formed of, for example, a material that does not react with lithium, i.e., a material that does not form an alloy and compound with lithium. The material constituting the negative current collector 21 may be, for example, selected from among copper (Cu), stainless steel, titanium (Ti), iron (Fe), cobalt (Co), and nickel (Ni), but is not limited thereto, and any materials commonly available in the art as electrode current collectors may also be utilized. The negative current collector 21 may be formed of one metal selected from those described or an alloy or coated material of two or more metals. The negative current collector 21 may be, for example, in the form of a plate or foil.

Referring to FIG. 2, the solid (e.g., all-solid) secondary battery 1 may further include a thin film 23 containing an element capable of forming an alloy with lithium on one side of the negative current collector 21. The thin film 23 is provided between the negative current collector 21 and the first negative active material layer 22. The thin film 23 includes, for example, an element capable of forming an alloy with lithium. Examples of the element capable of forming an alloy with lithium may be selected from among gold, silver, zinc, tin, indium, silicon, aluminum, and bismuth, but are not limited thereto, and any elements capable of forming an alloy with lithium well suitable in the art may also be utilized. The thin film 23 is formed of any one of the metals or an alloy of one or more suitable types (kinds) of metals. By disposing the thin film 23 on one surface of the negative current collector 21, the second negative active material layer 24 plated between the thin film 23 and the first negative active material layer 22 becomes flatter, thereby further improving cycle characteristics of the solid (e.g., all-solid) secondary battery 1.

For example, the thin film 23 may have a thickness of about 1 nm to about 800 nm, about 10 nm to about 700 nm, about 50 nm to about 600 nm, or about 100 nm to about 500 nm. If (e.g., when) the thickness of the thin film 23 is less than 1 nm, the function of the thin film 23 is difficult to obtain. If (e.g., when) the thickness of the thin film 23 is too large, the thin film 23 absorbs lithium and an amount of plated lithium in the negative electrode decreases, and thus energy density of the solid (e.g., all-solid) secondary battery 1 may decrease and cycle characteristics of the solid (e.g., all-solid) secondary battery 1 may deteriorate. The thin film 23 may be formed on the negative current collector 21 by, for example, vacuum deposition, sputtering, or plating. However, the method is not limited thereto and any method commonly utilized in the art to form a thin film may also be utilized.

In some embodiments, the negative current collector 21 may include, for example, a base film and a metal layer provided on one or both (e.g., opposite) sides of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or combinations thereof. The polymer may be an insulating polymer. Because the base film includes an insulating thermoplastic polymer, the base film softens or liquefies in the event of a short circuit to stop the operation a battery thereby inhibiting a rapid increase in currents. The metal layer may include, for example, copper (Cu), stainless steel, titanium (Ti), iron (Fe), cobalt (Co), nickel (Ni), or an alloy thereof. The negative current collector 21 may further include a metal chip and/or a lead tab. For detailed descriptions of the base film, the metal layer, the metal chip, and the lead tab of the negative current collector 21, refer to the described positive current collector 11. Because the negative current collector 21 has the described structure, the weight of the negative electrode may be reduced, so that energy density of the negative electrode and the lithium battery may be increased.

**Electrolyte Layer**

**Electrolyte Layer: Electrolyte**

Referring to FIGS. 1 to 6, the electrolyte layer 30 includes an electrolyte provided between the positive electrode 10 and the negative electrode 20. The electrolyte may include, for example, a solid electrolyte, a gel electrolyte or a combination thereof.

The solid electrolyte may include, for example, a sulfide-based solid electrolyte, an oxide-based solid electrolyte, a polymer solid electrolyte, or any combination thereof.

The solid electrolyte may be, for example, a sulfide-based solid electrolyte. The sulfide-based solid electrolyte may include, for example, at least one selected from among $Li_2S-P_2S_5$, $Li_2S-P_2S_5-LiX$ (where X is a halogen atom) $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are positive numbers, and Z is Ge, Zn, or Ga), $Li_2S-GeS_2$, $Li_2S-SiS_2-Li_3PO_4$, $Li_2S-SiS_2-Li_pMO_q$ (where p and q are positive numbers and M is P, Si, Ge, B, Al, Ga, or In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). The sulfide-based solid electrolyte may be manufactured by treating starting materials such as $Li_2S$ and $P_2S_5$ by a melt quenching method, a mechanical milling method, and/or the like. In some embodiments, heat treatment may be performed after such treatment. The solid electrolyte may be in an amorphous state, a crystalline state, or a mixed state thereof. In some embodiments, the solid electrolyte may include, for example, sulfur (S), phosphorus (P), and lithium (Li) as components among materials for the described sulfide-based solid electrolyte. For example, the solid electrolyte may be a material including $Li_2S-P_2S_5$. If (e.g., when) utilizing the material including $Li_2S-P_2S_5$ as the sulfide-based solid electrolyte material constituting the solid electrolyte, a mixing molar ratio of $Li_2S$ to $P_2S_5$ may be, for example, from 20:80 to 90:10, from 25:75 to 90:10, from 30:70 to 70:30, or from 40:60 to 60:40.

The sulfide-based solid electrolyte may include, for example, an argyrodite type or kind solid electrolyte represented by Formula 1.

$$\text{Formula 1} \qquad Li^+{}_{12-n-x}A^{n+}X^{2-}{}_{6-x}Y^-{}_x$$

In Formula 1, A is P, As, Ge, Ga, Sb, Si, Sn, Al, In, Ti, V, Nb, or Ta, X is S, Se, or Te, Y is Cl, Br, I, F, CN, OCN, SCN, or $N_3$, $1 < n < 5$, and $0 < x < 2$. The sulfide-based solid electrolyte may be an argyrodite-type or kind compound including, for example, at least one selected from among $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). The sulfide-based solid electrolyte may be (or may comprise) an argyrodite-type or kind compound including, for example, at least one selected from among $Li_6PS_5Cl$, $Li_6PS_5Br$, and $Li_6PS_5I$.

The argyrodite-type or kind solid electrolyte may have a density of 1.5 gram per cubic centimeter (g/cc) to 2.0 g/cc. Because the argyrodite-type or kind solid electrolyte has a density of 1.5 g/cc or more, internal resistance of the solid (e.g., all-solid) secondary battery may be reduced and penetration of the electrolyte layer may be effectively inhibited.

The oxide-based solid electrolyte may be, for example, at least one selected from among $Li_{1+x+y}Al_xTi_{2-x}Si_yP_{3-y}O_{12}$ (where $0 < x < 2$ and $0 \leq y < 3$), $BaTiOs$, $Pb(Zr,Ti)O_3$ (PZT), $Pb_{1-x}La_xZr_{1-y}Ti_yO_3$ (PLZT, where $0 \leq x < 1$ and $0 \leq y < 1$), $PB(Mg_3Nb_{2/3})O_3-PbTiO_3$ (PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (where $0 < x < 2$ and $0 < y < 3$), $Li_xAl_yTi_z(PO_4)_3$ (where $0 < x < 2$, $0 < y < 1$, and $0 < z < 3$), $Li_{1+x+y}(Al, Ga)_x(Ti, Ge)_{2-x}Si_yP_{3-y}O_{12}$ (where $0 \leq x \leq 1$ and $0 \leq y \leq 1$), $Li_xLa_yTiO_3$ (where $0 < x < 2$ and $0 < y < 3$), $Li_2O$, $LiOH$, $Li_2CO_3$, $LiAlO_2$, $Li_2O-Al_2O_3-SiO_2-P_2O_5-TiO_2-GeO_2$, and $Li_{3+x}La_3M_2O_{12}$ (where M = Te, Nb, or Zr, and $0 \leq x \leq 10$), or any combination thereof. The oxide-based solid electrolyte is manufactured, for example, by a sintering method, and/or the like.

For example, the oxide-based solid electrolyte is, for example, a garnet-type or kind solid electrolyte selected from among $Li_7La_3Zr_2O_{12}$ (LLZO) and $Li_{3+x}La_3Zr_{2-a}M_aO_{12}$ (M doped LLZO, where M=Ga, W, Nb, Ta, or Al, $0 < a < 2$, and $0 \leq x \leq 10$).

The polymer solid electrolyte may include, for example, a mixture of a lithium salt and a polymer or a polymer having ion-conductive functional group. The polymer solid electrolyte may be, for example, a polymer electrolyte in a solid state at 25 °C and 1 atm. The polymer solid electrolyte may not include (e.g., may exclude) a liquid. The polymer solid electrolyte includes a polymer. The polymer may be, for example, at least one selected from among polyethylene oxide (PEO), polyvinylidene fluoride (PVDF), polyvinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA) , polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), and lithium 9,10-diphenylanthracene-2-sulfonate (DPASLi$^+$), or any combination thereof, but is not limited thereto, and any compounds commonly utilized in the art as polymer electrolytes may be utilized. The lithium salt may also be any lithium salt commonly utilized in the art. For example, the lithium salt is at least one selected from among LiPF$_6$, LiBF$_4$, LiSbF$_6$, LiAsF$_6$, LiClO$_4$, LiCFsSOs, Li(CF$_3$SO$_2$)$_2$N, Li(FSO$_2$)$_2$N, LiC$_4$F$_9$SO$_3$, LiAlO$_2$, LiAlCl$_4$, LiN(C$_x$F$_{2x+1}$SO$_2$)(C$_y$F$_{2y+1}$SO$_2$) (where x and y are from 1 to 20, respectively), LiCl, Lil, and/or mixtures (and/or combinations) thereof. The polymer included in the polymer solid electrolyte may be, for example, a compound including 10 or more, 20 or more, 50 or more, or 100 or more repeating units. The polymer included in the polymer solid electrolyte may have a weight average molecular weight of, for example, 1000 Dalton (Da) or more, 10,000 Da or more, 100,000 Da or more, or 1,000,000 Da or more.

The gel electrolyte may be, for example, a polymer gel electrolyte. The gel electrolyte may have a gel state without including a polymer.

The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state excluding (e.g., without including) a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in the polymer solid electrolyte. The organic solvent may be selected from organic solvents utilized in liquid electrolytes. The lithium salt may be selected from lithium salts utilized in polymer solid electrolytes. The ionic liquid refers to a salt in a liquid state, and a molten salt at room temperature composed solely of ions and having a melting point room temperature. The ionic liquid may include, for example, at least one compound including a) at least one cation selected from among ammonium, pyrrolidinium, pyridinium, pyrimidium, imidazolium, piperidinium, pyrazolium, oxazolium, pyridazinium, phosphonium, sulfonium, triazolium, and one or more mixtures (and/or combinations) thereof, and b) at least one anion selected from among BF$_4^-$, PF$_6^-$, AsF$_6^-$, SbF$_6^-$, AlCl$_4^-$, HSO$_4^-$, ClO$_4^-$, CH$_3$SO$_3^-$, CF$_3$CO$_2^-$, Cl$^-$, Br$^-$, I$^-$, SO$_4^{2-}$, CF$_3$SO$_3^-$, (FSO$_2$)$_2$N$^-$, (C$_2$F$_2$SO$_2$)$_2$N$^-$, (C$_2$F$_2$SO$_2$)(CF$_2$SO$_2$)N$^-$, and (CF$_2$SO$_2$)$_2$N$^-$. The polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have a weight average molecular weight of, for example, 500 Da or more, 1000 Da or more, 10,000 Da or more, 100,000 Da or more, or 1,000,000 Da or more .

**Electrolyte layer:Binder**

The electrolyte layer 30 may include, for example, a binder. The binder included in the electrolyte layer 30 is, for example, styrene butadiene rubber (SBR), polytetrafluoroethylene, polyvinylidene fluoride, or polyethylene, but is not limited thereto, and any binders commonly available in the art may also be utilized. The binder of the electrolyte layer 30 may be the same as or different from the binders included in the positive active material layer 12 and the first negative active material layer 22. The binder may not be provided.

An amount of the binder included in the electrolyte layer 30 may be from about 0.1 wt% to about 10 wt%, from about 0.1 wt% to about 5 wt%, from about 0.1 wt% to about 3 wt%, from about 0.1 wt% to about 1 wt%, from about 0 wt% to about 0.5 wt%, or from about 0 wt% to about 0.1 wt% based on a total weight of the electrolyte layer 30.

Referring to FIG. 6, the negative electrode 20 includes a negative current collector 21, and a lithium host layer 22 provided on one side of the negative current collector 21. A first inactive member 42 is provided on one side surface of the negative electrode 20. Also, A second inactive member 41 is provided on one side surface of the positive electrode layer 10

The first inactive member 42 is provided on one side surface of the lithium host layer 22 between the solid electrolyte layer 30 and one side of the negative current collector 21 facing the electrolyte layer 30. The second inactive member 42 is not provided on one side surface of the negative current collector 21. Referring to FIG. 6, the first inactive member 42 is provided one side surface of the lithium host layer 22 and the negative current collector 21. By including the first inactive member 42, a short circuit between lithium metal plated on the first negative active material layer 22 and the positive electrode 10 may be effectively prevented or reduced during charging and discharging of the solid (e.g., all-solid) secondary battery 1, and therefore cycle characteristics of the solid (e.g., all-solid) secondary battery 2 are improved. By including the first inactive member 42, occurrence of cracks is inhibited in the solid electrolyte layer 30 during manufacturing and/or charging and discharging of the solid (e.g., all-solid) secondary battery 1, so that cycle characteristics of the solid secondary battery 1 may be improved. In a solid secondary battery not including the first inactive member 42, a pressure is non-uniformly applied to the solid electrolyte layer 30 in contact with the negative electrode 20 to cause occurrence of cracks in the solid electrolyte layer 30 during manufacturing and/or charging and discharging of the solid (e.g., all-solid) secondary battery 1, and lithium metal grows thereby to increase the possibility of a short circuit.

Referring to FIGS. 1, 2, and 5, in the solid secondary battery 1, a thickness T2 of the first inactive member 42 is substantially identical to a thickness T1 of the lithium host layer 22. Because a sum of the thickness T2 of the first inactive member 42 and a thickness T4 of the negative current collector 21 is substantially identical to a thickness T3 of the negative electrode 20, a pressure is uniformly applied to between the negative electrode 20 and the solid electrolyte layer 30, and the negative electrode 20 is in sufficiently close contact with the solid electrolyte layer 30, so that interfacial resistance between the negative electrode 20 and the solid electrolyte layer 30 may be reduced. In some embodiments, the solid electrolyte layer 30 is sufficiently sintered during a pressing/manufacturing process of the solid secondary battery 1, and thus internal resistance of the solid electrolyte layer 30 and the solid secondary battery 1 including the same may be reduced.

A method of manufacturing a solid secondary battery according to one or more embodiments is as follows.

A solid secondary battery is manufactured by milling a composition including $M_2S$ and an alkali metal salt to produce a milled product; preparing the composite by adding a two-dimensional carbonaceous nanostructure and a fibrous carbonaceous material having an aspect ratio of 2 or more to the milled product and milling a mixture thereof; preparing a positive electrode by utilizing a composition prepared by adding a binder to the composite and mixing a mixture thereof; preparing a negative electrode; and applying an electrolyte between the positive electrode and the negative electrode.

In the preparing of the composite, a carbonaceous material may further be added to the mixture.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, one or more example embodiments of the present disclosure will be described in more detail with reference to the following examples and comparative examples. However, these examples are not intended to limit the purpose and scope of the one or more example embodiments.

**EXAMPLES**

**Preparation of Composite Positive Active Material**

**Example 1: 30 % Li2S - 20 % LiI - 5 % Graphene / 5 % CNF + 40 % SE**

**First Process**

$Li_2S$ and LiI were mixed in a weight ratio 30:20. The mixture was mechanically milled by utilizing a ball mill to prepare a $Li_2S$-LiI composite. Milling conditions were 25 °C, 600 rpm, and 10 hours.

**Second Process**

The $Li_2S$-LiI composite, carbon nanofibers (CNFs), and graphene were mixed in a weight ratio of 50:5:5. The mixture was mechanically milled by utilizing a ball mill for 10 hours to prepare a $Li_2S$-LiI-CNF-graphene composite. Milling conditions were 25 °C, 600 rpm, and 10 hours. A milling energy applied to a sample during milling was 28 G. The $Li_2S$-LiI-CNF-graphene composite was utilized as a composite positive active material.

$Li_2S$ had a Mohs hardness of 0.6, LiI had a Mohs hardness of 2.0, and carbon nanofibers (CNFs) had a Mohs hardness of 1.5.

Graphene having a thickness of 20 nm, a specific surface area of 19 $m^2$/g, and an average diameter of about 5 $\mu$m and purchased from Adeka Corporation was utilized.

**Example 2: 30 % $Li_2S$ - 20 % LiI - 3.75 % Graphene / 3.75 % CNF + 42.5 % SE**

A $Li_2S$-LiI-CNF-graphene composite was prepared in substantially the same manner as in Example 1, except that a mixing weight ratio of the $Li_2S$-LiI composite, CNFs, and graphene were 50:3.75:3.75.

**Example 3: 30 % Li$_2$S - 20 % LiI - 2.5 % Graphene / CNF 5 % + 45 % SE**

A Li$_2$S-LiI-CNF-graphene composite was prepared in substantially the same manner as in Example 1, except that a mixing weight ratio of the Li$_2$S-LiI composite, CNFs, and graphene were 50:2.5:5.

**Example 4: 40 % Li$_2$S - 20 % LiI - 2.5 % Graphene/5 % CNF+ 32.5 % SE**

**First Process**

Li$_2$S and LiI were mixed in a weight ratio 40:20. The mixture was mechanically milled by utilizing a ball mill to prepare a Li$_2$S-LiI composite. Milling conditions were 25 °C, 600 rpm, and 10 hours. (Second Process)
The Li$_2$S-LiI composite, carbon nanofibers (CNFs), and graphene were mixed in a weight ratio of 60:2.5:5. The mixture was mechanically milled by utilizing a ball mill for 10 hours to prepare a Li$_2$S-LiI-CNF-graphene composite. Milling conditions were 25 °C, 600 rpm, and 10 hours. The Li$_2$S-LiI-CNF-graphene composite was utilized as a composite positive active material.
Graphene having a thickness of 20 nm, a specific surface area of 19 m$^2$/g, and an average diameter of about 5 $\mu$m and purchased from Adeka Corporation was utilized.
Li$_2$S had a Mohs hardness of 0.6, and LiI had a Mohs hardness of 2.0.

**Comparative Example 1: Li2S-LiI-CNF, 510 rpm, 10 hr, two stages, 20G (KR 2017-0068448 (Tatsumisago)**

**First Process**

Li$_2$S and LiI were mixed in a weight ratio 30:20 to prepare a first mixture. The first mixture was mechanically milled by utilizing a ball mill to prepare a Li$_2$S-LiI composite.
Milling conditions were 25 °C, 510 rpm, and 10 hours. A milling energy applied to a sample during milling was 20 G.

**Second Process**

The Li$_2$S-LiI composite and carbon nanofibers (CNFs) were mixed in a weight ratio of 50:10 to prepare a second mixture. The second mixture was mechanically milled by utilizing a ball mill to prepare a Li$_2$S-LiI-CNF composite.
Milling conditions were 25 °C, 510 rpm, and 10 hours. A milling energy applied to a sample during milling was 20 G. The Li$_2$S-LiI-CNF composite was utilized as a composite positive active material.

**Comparative Example 2: Simple Blend of Li$_2$S, LiI, graphene, and CNFs**

Li$_2$S, LiI, graphene, and CNFs were mixed in a mortar in a weight ratio of 30:20:5:5. The mixture was utilized as a positive active material.

**Comparative Example 2-1: Simple Mixture of Li$_2$S-LiI composite, graphene, and CNFs**

The Li$_2$S-LiI composite, carbon nanofibers (CNFs), and graphene were mixed in a mortar in a weight ratio of 50:5:5 and the mixture was utilized as a positive active material.

**Reference Example 1: 30 % Li$_2$S - 20 % LiI - 7.5 % CNF**

A Li$_2$S-LiI-CNF composite was prepared in substantially the same manner as in Example 1, except that the Li$_2$S-LiI composite and carbon nanofibers (CNFs) were mixed in a weight ratio of 50:5:7.5.

**Preparation of Positive Electrode and Secondary Battery**

**Example 5**

**Preparation of Positive Electrode**

The Li$_2$S-LiI-CNF-graphene composite prepared in Example 1 was utilized as a positive active material. As a solid electrolyte, LisPSsCl (D50=3.0 $\mu$m, crystalline) that is argyrodite-type or kind crystal was prepared. As a binder, PTFE was prepared. These materials were physically mixed in a mortar in a weight ratio of the composite positive active material: solid electrolyte : binder = 60 : 40 : 1.2 to prepare a positive electrode mixture. The positive electrode mixture was obtained by dry mixing by utilizing a ball mill.

The positive electrode mixture was provided on one surface of the positive current collector formed from a carbon-coated aluminum foil and pressed by utilizing a plate press at a pressure of 200 MPa for 10 minutes to prepare a positive electrode in a sheet form. The positive electrode had a thickness of about 120 $\mu$m and a loading level of the positive electrode mixture was about 8 mg/cm$^2$. The positive active material layer had a thickness of about 100 $\mu$m, and a carbon-coated aluminum foil had a thickness of about 20 $\mu$m. An area of the positive active material layer was identical to an area of the positive current collector.

## Preparation of Negative Electrode

An SUS foil having a thickness of 10 $\mu$m was prepared as a negative current collector. Carbon black (CB) with a primary particle diameter of about 30 nm and particles of silver (Ag) with an average particle diameter of about 60 nm were prepared as negative active materials.

4 g of mixed powder of the carbon black (CB) and silver (Ag) particles in a weight ratio of 3:1 was added to a container, and 4 g of a NMP solution including 7 wt% of a PVDF binder (# 9300 manufactured by Kureha Corporation) was added thereto to prepare a mixed solution. NMP was gradually added to the mixed solution while stirring the mixed solution to prepare a slurry. The prepared slurry was applied to the SUS sheet utilizing a bar coater and dried in the air at 80 °C for 10 minutes, and then dried in a vacuum at 40 °C for 10 hours to prepare a stack structure. The prepared stack structure was cold rolled by a cold roll press to planarize the surface to prepare a negative electrode having a first negative active material layer/negative current collector structure. A thickness of the first negative active material layer was about 15 $\mu$m. An area of the first negative active material layer was identical to that of the negative current collector.

## Preparation of Solid Electrolyte Layer

A LisPSsCl solid electrolyte (D$_{50}$=3.0 $\mu$m, crystalline), as an argyrodite-type or kind crystalline, was prepared. 1.5 parts by weight of an acrylic binder was added to 98.5 parts by weight of the solid electrolyte to prepare a mixture. Octyl acetate was added to the prepared mixture while stirring to prepare a slurry. The prepared slurry was applied to a 15 $\mu$m-thick non-woven fabric placed on a 75 $\mu$m-thick PET substrate by utilizing a bar coater, and dried in the air at 80 °C for 10 minutes to obtain a stack structure. The prepared stack structure was dried at 80 °C in a vacuum for 2 hours to prepare a solid electrolyte layer.

## Inactive Member

A slurry prepared by mixing pulp fibers (cellulose fibers), glass fibers, aluminum hydroxide (Al(OH)$_3$), an acrylic binder, and a solvent was molded in a gasket form, and the solvent was removed therefrom to prepare a flame-retardant inactive member.

A weight ratio of pulp fiber (cellulose fibers), glass fibers, aluminum hydroxide (Al(OH)$_3$), and the acrylic binder was 20:8:70:2. The inactive member had a thickness of 120 $\mu$m.

Before arranging the prepared flame-retardant inactive member on the solid electrolyte layer, heat treatment was performed in a vacuum at 80 °C for 5 hours to remove moisture and/or the like from the flame-retardant inactive member.

## Preparation of Solid (e.g., all-solid) Secondary Battery

Referring to FIG. 4, the solid electrolyte layer was provided on the negative electrode such that the first negative active material layer was in contact with the solid electrolyte layer, and the positive electrode was provided on the solid electrolyte layer. A gasket was arranged around the positive electrode to surround the positive electrode and to be in contact with the solid electrolyte layer to prepare a stack structure. The gasket had a thickness of about 120 $\mu$m. As the gasket, the flame-retardant inactive member was utilized. The gasket was located to be in contact with side surfaces of the positive electrode and the solid electrolyte layer. The positive electrode was located at a central region of the solid electrolyte layer, and the gasket is located to surround the positive electrode and to extend to an end portion of the solid electrolyte layer. An area of the positive electrode was about 90 % of an area of the solid electrolyte layer, and the gasket was located over the entire area of the remaining 10 % area of the solid electrolyte layer on which the positive electrode was not located.

The prepared stack structure was pressed by a plate press at 85 °C at a pressure of 500 MPa for 30 min. By such pressing treatment, the solid electrolyte layer was sintered to improve battery characteristics. The sintered solid electrolyte layer had a thickness of about 45 $\mu$m. The argyrodite-type or kind crystalline LisPSsCl solid electrolyte included in the sintered solid electrolyte layer had a density of 1.6 g/cc. An area of the solid electrolyte layer was the same as an area of the negative electrode.

The pressed stack structure was added to a pouch and sealed to prepare a solid (e.g., all-solid) secondary battery. Portions of the positive current collector and the negative current collector were extended to the outside of the sealed battery to be utilized as a positive electrode terminal and a negative electrode terminal.

### Examples 6 and 7

Positive electrodes and solid secondary batteries were prepared in substantially the same manner as in Example 5, except that the composite positive active materials prepared in Examples 2 and 3 were utilized instead of the composite positive active material of Example 1.

### Example 7-1

A positive electrode and a solid secondary battery were prepared in substantially the same manner in Example 7, except that a loading level of the positive electrode mixture was about 16 mg/cm$^2$ while the positive electrode is manufactured.

### Example 8

A positive electrode and a solid secondary battery were prepared in substantially the same manner in Example 5, except that the composite positive active material prepared in Example 4 was utilized instead of the composite positive active material prepared in Example 1 and a loading level of about 24 mg/cm$^2$ was utilized.

### Comparative Examples 3 and 4 (loading level of about 8 mg/cm$^2$)

Positive electrodes and solid secondary batteries were prepared in substantially the same manner as in Example 5, except that the composite positive active materials prepared in Comparative Examples 1 and 2 were utilized, respectively.

### Comparative Example 4-1

A positive electrode and a solid (e.g., all-solid) secondary battery were prepared in substantially the same manner as in Example 5, except that the positive active material of Comparative Example 2-1 was utilized.

### Reference Example 2

A positive electrode and a solid (e.g., all-solid) secondary battery were prepared in substantially the same manner as in Example 5, except that the composite positive active material of Reference Example 1 was utilized.

### Evaluation Example 1: XRD Analysis and SEM Analysis

XRD spectra of the composite positive active materials (i.e., composites) prepared in Example 1 and Comparative Example 2 were obtained by utilizing Cu K$\alpha$ radiation. Sizes of Li$_2$S crystallites calculated from first peaks observed at a diffraction angle (2θ) of 27° $\pm$ 2.0° corresponding to crystal plane (111) in the obtained XRD spectra are shown in Table 1. The size of crystallites was calculated by utilizing Sherrer Equation.

Particle diameters (D50) of the Li$_2$S in of the composite positive active materials prepared in Example 1 and Comparative Example 2 were measured by utilizing a particle size analyzer (PSA) utilizing a laser and a scanning electron microscope (SEM). The Li$_2$S particle size of the composite cathode active material is the arithmetic average of the particle sizes of a plurality of Li$_2$S particles measured utilizing software in a scanning electron microscope image. Measurement results are shown in Table 1.

Table 1

| Category | Milling of first process | Milling of second process | Formation of solid solution | Size of $Li_2S$ crystallites [nm] | $Li_2S$ Particle size [$\mu$m] |
|---|---|---|---|---|---|
| Example 1 (30 % $Li_2S$ - 20 % LiI - 5 % Graphene/5 % CNF+ 40 % SE) | 600 rpm, 28 G, 10 hr | 600 rpm, 28 G, 10 hr | ○ | 9.8 | less than 1 |
| Example 2 (30 % $Li_2S$ - 20 % LiI - 3.75 % Graphene/3.75 % CNF+ 42.5 % SE) | 600 rpm, 28 G, 10 hr | 600 rpm, 28 G, 10 hr | ○ | 9.9 | less than 1 |
| Example 3 (30 % $Li_2S$ - 20 % LiI - 2.5 % Graphene/5 % CNF+ 45 % SE | 600 rpm, 28 G, 10 hr | 600 rpm, 28 G, 10 hr | ○ | 9.6 | less than 1 |
| Example 4 (40 % $Li_2S$ - 20 % LiI - 2.5 % Graphene/5 % CNF+ 32.5 % SE | 600 rpm, 28 G, 10 hr | 600 rpm, 28 G, 10 hr | ○ | 10.2 | less than 1 |
| Comparative Example 1 (Tatsumisago) 30 % $Li_2S$ -20 % LiI - 10% CNF | 600 rpm, 28 G, 10 hr | 600 rpm, 28 G, 10 hr | ○ | 9.8 | less than 1 |
| Comparative Example 2 (30 % $Li_2S$ + 20 % LiI + 2.5 % Graphene/5 % CNF ($Li_2S$ +LiI+graphene+CNF simple mixture) | 600 rpm, 28 G, 2 hr | - | X | 64.4 | 8 |
| Comparative Example 2-1 (30 % $Li_2S$ - 20 % LiI + 2.5 % Graphene + 5 % CNF (graphene+CNF simple mixture) | 600 rpm, 28 G, 10 hr | - | ○ | 10.0 | 2 |
| Reference Example 1 (30 % $Li_2S$ - 20 % LiI - 7.5 % CNF) | 600 rpm, 28 G, 10 hr | 600 rpm, 28 G, 10 hr | ○ | 10.0 | less than 1 |

As shown in Table 1, the composite of Example 1 includes the $Li_2S$-LiI solid solution in which the size of $Li_2S$ crystallites was less than 9.9 nm and the particle size of $Li_2S$ in the composite was 2 $\mu$m or less.

As shown in Table 1, "○" indicates that a solid solution was formed and "X" indicates that a solid solution was not formed. For example, the simple mixture of Comparative Example 2 could not form a solid solution.

In some embodiments, an intensity derived from a first peak observed at a diffraction angle (2$\theta$) of 18° ± 2.0° of the $Li_2S$-LiI-CNF-graphene composite of Example 1 corresponding to crystal plane (002) in an XRD spectrum of the composite was less (e.g., smaller) than an intensity derived from a second peak observed at a diffraction angle (2$\theta$) of 18° ± 2.0° of bare CNFs or graphene corresponding to crystal plane (002).

In some embodiments, the first peak of the $Li_2S$-LiI-CNF-graphene composite of Example 1 had a first full width at half maximum (FWHM1), and the second peak of the bare CNFs or graphene had a second full width at half maximum (FWHM2), wherein the first full width at half maximum (FWHM1), was greater than the second full width at half maximum (FWHM2). The first full width at half maximum (FWHM1), was 1° or more.

**Evaluation Example 2: Charging/discharging Test**

Charging and discharging characteristics of solid secondary batteries prepared in Examples 5 to 7, 7-1, and 8 and Comparative Examples 3, 4, and 4-1, Reference Example 2 were tested by a charging/discharging test as follows.

The charging/discharging test was performed by placing the solid secondary batteries in a thermostatic bath at 45 °C.

A first cycle was performed by charging each battery at a constant current of 0.1 C for 12.5 hours until a battery voltage reached 2.5 V to 2.8 V. Subsequently, the battery was discharged at a constant current of 0.1 C for 12.5 hours until the battery voltage reached 0.3 V.

A discharge capacity of the first cycle was utilized as a standard capacity. The standard capacity was represented by specific capacity of $Li_2S$ in Table 1.

From the second cycle, charging and discharging were performed up to 150 cycles under the same conditions as those of the first cycle. Measurement results are shown in Table 2. Initial efficiency is represented by Equation 1.

Equation 1

$$\text{Initial efficiency [\%]} = [\text{discharge capacity of first cycle} / \text{charge capacity of first cycle}] \times 100$$

The number of cycles refers to a number of cycles required to reduce a discharge capacity to 80% of a standard capacity after a second cycle. As the number of cycles increases, it was considered to have excellent or suitable lifespan characteristics.

Table 2

| Category | Loading level | Specific capacity [mAh/g] | Electrode density (g/cm$^3$) | Electrode capacity (mAh/g) | Initial efficiency [%] | No. of cycles (No.) |
|---|---|---|---|---|---|---|
| Example 5 (composite positive active material of Example 1) (30 % Li$_2$S - 20 % LiI - 5 % Graphene/5 % CNF+ 40 % SE) | 8 | 1010 | 1.39 | 303 | 81.5 | 305 |
| Example 6 (composite positive active material of Example 2) (30 % Li$_2$S - 20 % LiI - 3.75 % Graphene/3.75 % CNF+ 42.5 % SE) | 8 | 1050 | 1.47 | 315 | 82 | 350 |
| Example 7 (composite positive active material of Example 3) 30 % Li$_2$S - 20 % LiI - 2.5 % Graphene/5 % CNF+ 45 % SE | 8 | 1110 | 1.48 | 333 | 84 | 400 |
| Example 7-1 (same as Example 7 except for thick film) 30 % Li$_2$S - 20 % LiI - 2.5 % Graphene/5 % CNF+ 45 % SE (thick film) | 16 | 1010 | 1.48 | 303 | 82.5 | 360 |
| Example 8 (composite positive active material of Example 4) 40 % Li$_2$S - 20 % LiI - 2.5 % Graphene/5 % CNF+ 32.5 % SE (thick film) | 24 | 980 | 1.5 | 392 | 81.5 | 355 |
| Comparative Example 3 (Tatsumisago) (positive active material of Comparative Example 1) Li$_2$S-LiI-CNF 30% Li$_2$S - 20 % LiI - 10% CNF | 8 | 900 | 1.4 | 270 | 81 | 100 |
| Comparative Example 4 (positive active material of Comparative Example 2) 30 % Li$_2$S + 20 % LiI + 2.5 % Graphene/5 % CNF (Li$_2$S +LiI+graphene+CNF simple mixture) | 8 | 30 | 1.48 | 9 | - | - |
| Comparative Example 4-1 (positive active material of Comparative Example 2-1) 30 % Li$_2$S - 20 % LiI + 2.5 % Graphene + 5 % CNF (graphene+CNF simple mixture) | 8 | 70 | 1.48 | 21 | - | - |

(continued)

| Category | Loading level | Specific capacity [mAh/g] | Electrode density (g/cm$^3$) | Electrode capacity (mAh/g) | Initial efficiency [%] | No. of cycles (No.) |
|---|---|---|---|---|---|---|
| Reference Example 2 (composite positive active material of Reference Example 1) 30 % Li$_2$S - 20 % LiI - 7.5 % CNF | 8 | 700 | 1.5 | 210 | 65 | 10 |

In Table 2, "-" indicates that the obtained results could not be measured (e.g., were too low). As shown in Table 2, the solid secondary batteries of Examples 5 to 8 including the composite positive active materials of Examples 1 to 4 had improved discharge capacity, initial efficiency, and lifespan characteristics, compared to the solid secondary battery of Comparative Examples 3, 4, and 4-1 and Reference Example 2.

The discharge capacity decreased and the lifespan characteristics deteriorated in the solid secondary battery of Comparative Example 4 including the composite positive active material of Comparative Example 2 including crystallites with increased size. In some embodiments, the initial efficiency decreased and/or the lifespan characteristics deteriorated in the solid secondary batteries of Comparative Examples 3, 4 and 4-1.

According to an aspect, a solid (e.g., all-solid) secondary battery having improved initial efficiency, energy density, and lifespan characteristics may be provided because a volume expansion of electrodes is reduced by including a positive electrode with improved electron conduction network.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

**Claims**

1. A solid secondary battery (1), the solid secondary battery (1) comprising: a positive electrode (10); a negative electrode (20); and an electrolyte layer (30) between the positive electrode (10) and the negative electrode (20), wherein

   the positive electrode (10) comprises: a positive current collector (11); and a positive active material layer (12) on at least one side of the positive current collector (11),
   the positive active material layer (12) comprises a composite positive active material,
   the composite positive active material comprises a composite comprising an M$_2$S, an alkali metal salt, a two-dimensional carbonaceous nanostructure, and a fibrous carbonaceous material with an aspect ratio of 2 or more, M being an alkali metal that is Li or Na,
   the two-dimensional carbonaceous nanostructure comprises graphene, a graphene oxide, a reduced graphene oxide, or a composition thereof, and

the composite comprises a solid solution of the M$_2$S and the alkali metal salt.

2. The solid secondary battery (1) as claimed in claim 1, wherein the fibrous carbonaceous material has a length of about 1 micrometer ($\mu$m) to about 50 $\mu$m and a diameter of about 10 nanometer (nm) to 10 $\mu$m, and
   the fibrous carbonaceous material comprises a carbon nanofiber, a carbon nanotube, or a combination thereof.

3. The solid secondary battery (1) as claimed in claim 1 or 2, wherein the two-dimensional carbonaceous nanostructure comprises graphene doped with a dopant, and
   wherein

   the dopant comprises an n-type or kind dopant or p-type or kind dopant, and
   the dopant comprises nitrogen (N), phosphorus (P), boron (B), sulfur (S), fluorine (F), chlorine (Cl), bromine (Br), germanium (Ge), gallium (Ga), or a combination thereof.

4. The solid secondary battery (1) as claimed in claims 1 to 3, wherein

   an intensity derived from a first peak observed at a diffraction angle (2$\theta$) of 18° $\pm$ 2.0° in an XRD spectrum of the composite is less than an intensity derived from a second peak observed at a diffraction angle (2$\theta$) of 18° $\pm$ 2.0° in an XRD spectrum of graphene used to manufacture the composite,
   the first peak has a first full width at half maximum (FWHM1),
   the second peak has a second full width at half maximum (FWHM2),
   the FWHM1 is greater than the FWHM2, and
   the FWHM1 is 1° or more.

5. The solid secondary battery (1) as claimed in claims 1 to 4, wherein

   an amount of the two-dimensional carbonaceous nanostructure is about 0.1 parts by weight to about 20 parts by weight based on 100 parts by weight of the composite, and
   the two-dimensional carbonaceous nanostructure has a specific surface area of about 1 square meter per gram (m$^2$/g) to about 50 m$^2$/g, a diameter of about 1 $\mu$m to about 50 $\mu$m, and a thickness of about 5 nm to about 50 nm.

6. The solid secondary battery (1) as claimed in claims 1 to 5, wherein

   an amount of the fibrous carbonaceous material is about 1 part by weight to about 40 parts by weight based on 100 parts by weight of a total weight of the composite, and a
   molar ratio of the M$_2$S to the alkali metal salt is about 50:50 to about 95:5.

7. The solid secondary battery (1) as claimed in claims 1 to 6, wherein

   the alkali metal salt is a lithium salt or a sodium salt,
   the alkali metal salt is a binary compound or a ternary compound,
   the binary compound comprises LiI, LiBr, LiCl, LiF, LiH, Li$_2$O, Li$_2$Se, Li$_2$Te, Li$_3$N, Li$_3$P, Li$_3$As, Li$_3$Sb, Li$_3$Al$_2$, LiB$_3$, or a combination thereof, or comprises NaI, NaBr, NaCl, NaF, Na$_2$O, Na$_2$Se, Na$_3$N, Na$_3$P, Na$_3$As, Na$_3$Sb, Na$_3$Al$_2$, NaB$_3$, or a combination thereof, and
   the ternary compound comprises Li$_3$OCl, LiPF$_6$, LiBF$_4$, LiSbF$_6$, LiAsF$_6$, LiClO$_4$, LiAlO$_2$, LiAlCl$_4$, LiNO$_3$, Li$_2$CO$_3$, LiBH$_4$, Li$_2$SO$_4$, Li$_3$BO$_3$, Li$_3$PO$_4$, Li$_4$NCl, Li$_5$NCl$_2$, Li$_3$BN$_2$, or a combination thereof, or comprises Na$_3$OCl, NaBF$_4$, NaPF$_6$, NaAsF$_6$, NaClO$_4$, NaNO$_3$, NaAlO$_2$, NaAlCl$_4$, NaNO$_3$, Na$_2$CO$_3$, NaBH$_4$, Na$_2$SO$_4$, Na$_3$BO$_3$, Na$_3$PO$_4$, Na$_4$NCl, Na$_5$NCl$_2$, Na$_3$BN$_2$, or a combination thereof.

8. The solid secondary battery (1) as claimed in claims 1 to 7, wherein

   the positive active material layer (12) further comprises a solid electrolyte, and
   the positive active material layer (12) comprises about 40 parts by weight to about 90 parts by weight of the composite positive active material and about 10 parts by weight to about 60 parts by weight of the solid electrolyte based on 100 parts by weight of the positive active material layer (12).

9. The solid secondary battery (1) as claimed in claims 1 to 8, wherein the composite is in the form of particles and has a size of 10 $\mu$m or less.

10. The solid secondary battery (1) as claimed in claims 1 to 9, wherein the composite further comprises a carbonaceous material.

11. The solid secondary battery (1) as claimed in claims 1 to 10, wherein the negative electrode (20) comprises a negative current collector (21) and a first negative active material layer (22) on the negative current collector (21); and/or

wherein a negative active material of the first negative active material layer (22) comprises at least one selected from among a carbonaceous negative active material and a metallic negative active material, the carbonaceous negative active material comprises amorphous carbon, crystalline carbon, porous carbon, or a combination thereof, and
the metallic negative active material comprises gold (Au), platinum (Pt), palladium (Pd), silicon (Si), silver (Ag), aluminum (Al), bismuth (Bi), tin (Sn), zinc (Zn), or a combination thereof; and/or
wherein a negative active material of the first negative active material layer (22) is a mixture of a metallic negative active material and a carbonaceous material, or comprises a metallic negative active material that is supported on a carbonaceous material.

12. The solid secondary battery (1) as claimed in claims 1 to 11, wherein the negative electrode (20) comprises a negative current collector (21) and a lithium host layer on one side of the negative current collector (21), and wherein

the lithium host layer comprises a lithium host structure,
the lithium host structure comprises at least one lithium host,
the lithium host comprises a carbonaceous lithium host, a metallic lithium host, a polymeric lithium host, or a combination thereof, and
an inactive member (40) is on one side surface of the negative electrode (20); and/or
wherein the negative electrode (20) further comprises a second negative active material layer (24) between the negative current collector (21) and the first negative active material layer (22), and wherein
the second negative active material layer (24) is a metal layer comprising lithium or a lithium alloy,
the second negative active material layer (24) is a plated layer, and
a thickness of the first negative active material layer (22) is greater than a thickness of the second negative active material layer (24); and/or
wherein at least one of the positive current collector (11) or the negative current collector (21) comprises a base film and a metal layer on at least one side of the base film,
the base film comprises a polymer, and the polymer comprises polyethyleneterephthalate (PET), polyethylene (PE), polypropylene (PP), polybutyleneterephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

13. The solid secondary battery (1) as claimed in claims 1 to 12, further comprising an inactive elastic member on one side of the positive electrode (10) or on one side of the negative electrode (20), or not comprising the inactive elastic member.

14. The solid secondary battery (1) as claimed in claims 1 to 13, wherein

the electrolyte layer (30)comprises a solid electrolyte, a gel electrolyte, or a combination thereof,
the solid electrolyte comprises a sulfide-based solid electrolyte, an oxide-based solid electrolyte, a polymer solid electrolyte, or a combination thereof, and
the gel electrolyte comprises a polymer gel electrolyte; wherein
preferably the sulfide-based solid electrolyte comprises at least one selected from among

$Li_2S-P_2S_5$,
$Li_2S-P_2S_5$-LiX, where X is a halogen,
$Li_2S-P_2S_5-Li_2O$,
$Li_2S-P_2S_5-Li_2O$-LiI,
$Li_2S-SiS_2$,
$Li_2S-SiS_2$-LiI,
$Li_2S-SiS_2$-LiBr,

$Li_2S$-$SiS_2$-LiCl,

$Li_2S$-$SiS_2$-$B_2S_3$-LiI,

$Li_2S$-$SiS_2$-$P_2S_5$-LiI,

$Li_2S$-$B_2S_3$,

$Li_2S$-$P_2S_5$-$Z_mS_n$, where m and n are positive numbers and Z is Ge, Zn, or Ga,

$Li_2S$-$GeS_2$,

$Li_2S$-$SiS_2$-$Li_3PO_4$,

$Li_2S$-$SiS_2$-$Li_pMO_q$, where p and q are positive numbers and M is P, Si, Ge, B, Al, Ga, or In,

$Li_{7-x}PS_{6-x}Cl_x$, where $0 \leq x \leq 2$,

$Li_{7-x}PS_{6-x}Br_x$, where $0 \leq x \leq 2$, and

$Li_{7-x}PS_{6-x}I_x$, where $0 \leq x \leq 2$,

the sulfide-based solid electrolyte is an argyrodite-type solid electrolyte,

the argyrodite-type solid electrolyte comprises at least one selected from among $Li_6PS_5Cl$, $Li_6PS_5Br$, and LisPSsI, and

the argyrodite-type solid electrolyte has a density of about 1.5 gram per cubic centimeter (g/cc) to about 2.0 g/cc.

15. A method of manufacturing the solid secondary battery (1) as claimed in claims 1 to 14, the method comprising:

milling a composition comprising the $M_2S$ and the alkali metal salt to produce a milled product;

preparing the composite by adding the two-dimensional carbonaceous nanostructure and the fibrous carbonaceous material with an aspect ratio of 2 or more to the milled product and milling a mixture thereof;

preparing a positive electrode by using a composition prepared by adding a binder to the composite and mixing a mixture thereof;

preparing a negative electrode; and

applying a solid electrolyte between the positive electrode and the negative electrode,

wherein M is an alkali metal that is Li or Na.

# FIG. 1

# FIG. 2

# FIG. 3

# FIG. 4

# FIG. 5

1

11 ⎫
12 ⎬ 10
40
30
22 ⎫
21 ⎬ 20

# FIG. 6

S4

11 ⎫
10
12 ⎬
41 ⎫
40
30
42 ⎬
22 ⎫
20
21 ⎬

T2

T1

T3

T4

S2

S1    S3

W1    W2

Europäisches
Patentamt

European
Patent Office

Office européen
des brevets

# EUROPEAN SEARCH REPORT

Application Number

EP 24 15 6308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/050935 A1 (LEE MIJIN [KR] ET AL) 16 February 2023 (2023-02-16) * claims 1, 7-10 * * paragraphs [0045] - [0055], [0093], [0094] * ----- | 1-15 | INV. H01M4/58 H01M4/62 H01M10/0562 H01M4/02 |
| X | DE 10 2011 077932 B4 (FRAUNHOFER GES FORSCHUNG [DE]) 17 June 2021 (2021-06-17) * claims 1, 3, 4, 7, 9 * * paragraphs [0010], [0048] - [0069] * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 1 July 2024 | Riederer, Florian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 15 6308

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2024

| Patent document cited in search report | Publication date | Patent family member(s) | | Publication date |
|---|---|---|---|---|
| US 2023050935 A1 | 16-02-2023 | CN | 114982005 A | 30-08-2022 |
| | | EP | 4068425 A1 | 05-10-2022 |
| | | JP | 2023511598 A | 20-03-2023 |
| | | US | 2023050935 A1 | 16-02-2023 |
| | | WO | 2022060019 A1 | 24-03-2022 |
| DE 102011077932 B4 | 17-06-2021 | DE | 102011077932 A1 | 27-12-2012 |
| | | EP | 2724399 A1 | 30-04-2014 |
| | | JP | 6084211 B2 | 22-02-2017 |
| | | JP | 2014520379 A | 21-08-2014 |
| | | KR | 20140051901 A | 02-05-2014 |
| | | US | 2014234723 A1 | 21-08-2014 |
| | | WO | 2012175486 A1 | 27-12-2012 |

EPO FORM P0459

For more details about this annex : see Official Journal of the European Patent Office, No. 12/82

**EP 4 510 233 A1**

REFERENCES CITED IN THE DESCRIPTION

**Patent documents cited in the description**

- KR 1020230107864